(19) **Europäisches Patentamt / European Patent Office / Office européen des brevets**

(11) **EP 2 660 066 B1**

(12) **EUROPEAN PATENT SPECIFICATION**

(45) Date of publication and mention of the grant of the patent:
**20.04.2016 Bulletin 2016/16**

(51) Int Cl.:
**B41M 5/00** *(2006.01)* **B41J 2/01** *(2006.01)*
**C09D 11/00** *(2014.01)*

(21) Application number: **11852489.1**

(22) Date of filing: **26.12.2011**

(86) International application number:
**PCT/JP2011/007279**

(87) International publication number:
**WO 2012/090477 (05.07.2012 Gazette 2012/27)**

(54) **INKJET RECORDING METHOD**

TINTENSTRAHLAUFZEICHNUNGSVERFAHREN

PROCÉDÉ D'ENREGISTREMENT À JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2010 JP 2010291241**

(43) Date of publication of application:
**06.11.2013 Bulletin 2013/45**

(73) Proprietor: **DNP Fine Chemicals Co., Ltd.**
**Yokohama-shi, Kanagawa 226-0022 (JP)**

(72) Inventors:
• **INUMARU, Masaki**
  **Yokohama-shi**
  **Kanagawa 226-0022 (JP)**
• **SHIODA, Satoshi**
  **Yokohama-shi**
  **Kanagawa 226-0022 (JP)**
• **MIYATA, Eiichi**
  **Yokohama-shi**
  **Kanagawa 226-0022 (JP)**
• **OTOMARU, Takao**
  **Tokyo 162-8001 (JP)**

• **SUGITA, Yukio**
  **Yokohama-shi**
  **Kanagawa 226-0022 (JP)**
• **TAMURA, Mitsuyoshi**
  **Yokohama-shi**
  **Kanagawa 226-0022 (JP)**
• **YAMAZAKI, Fumie**
  **Yokohama-shi**
  **Kanagawa 226-0022 (JP)**
• **SHIRAISHI, Naoki**
  **Yokohama-shi**
  **Kanagawa 226-0022 (JP)**

(74) Representative: **Wagner, Matthias**
**Müller-Gerbes Wagner Albiger**
**Patentanwälte mbB**
**Siegfried-Leopold-Strasse 27**
**53225 Bonn (DE)**

(56) References cited:
**EP-A- 0 739 743**   **EP-A- 1 088 865**
**EP-A- 2 692 537**   **JP-A- 2001 348 519**
**JP-A- 2007 056 217**   **JP-A- 2008 265 060**
**US-A1- 2007 100 023**   **US-A1- 2007 100 024**

**Description**

TECHNICAL FIELD

The present invention relates to an inkjet recording method for printing on a recording medium to which an ink-receiving solution containing a specific metal salt has been applied by using an inkjet ink containing a specific pigment.

BACKGROUND ART

Paper which is widely used in recording media is a hydrophilic material and by nature, tends to have an affinity to water because many hydroxyl groups of cellulose exist therein, so that it absorbs water to swell. For this, a hydrophobic material (mainly, a neutral sizing agent) preventing bleeding is added during the course of producing paper for the purpose of providing water resistance to paper for recording media. Also, a white inorganic pigment (for example, clay and calcium carbonate) is added to paper for recording media to provide whiteness and transparency. Because the grain size of the pigment is smaller than the irregularities of fibers, surface roughness formed by the fibers remains on the surface of the paper and therefore, printing accuracy is limited if the paper is used as it is for printing. The surface of the paper is coated with a pigment primarily containing kaolin and calcium carbonate having a grain size of about 0.1 to 0.3 $\mu$m to be smoothened. However, a binder such as a synthetic latex used to fix this pigment fills clearances between the pigment grains to hydrophobicize the surface.

Heavy calcium carbonate (one obtained by milling and classifying natural lime stone) is usually used for coated paper such as art paper and coat paper, and uncoated paper such as high-quality paper and middle-quality paper.

Ink jet printing systems have been developed and widely put into practical use in recording medium printing fields. When an inkjet printer is used to print, ink droplets discharged from a print head are landed on a recording medium, penetrated and fixed to form dots, with a slot of these gathering dots, an image is formed. This process of formation of dots is important to form a clear image.

Absorbing materials such as uncoated paper, coated paper and cloth, and non-absorbing materials such as polyester resin and vinyl chloride resin are used as the materials of the surfaces of recording media. When uncoated paper is used as a recording medium, if inkjet ink is an aqueous ink, a coloring material is not retained on the surface of the paper because the aqueous ink is easily penetrated into paper fibers, posing a problem that paper bleeding (feathering) is easily caused, so that only insufficient density is obtained. When the bleeding becomes marked, there occurs the penetration of ink to the rear side. When coated paper is used, on the other hand, ink is scarcely penetrated and a coloring material is scarcely fixed because a coat layer exists on the surface of the paper, whereby color bleeding tends to occur so that a clear image cannot be obtained. When a non-absorbing material is used as a recording medium, ink is scarcely penetrated and a coloring material is scarcely fixed, whereby color bleeding which is nonuniform color mixing at a boundary area between different colors readily occurs so that a clear image cannot be obtained.

Patent Document 1 discloses a color inkjet recording method for printing on a recording medium by using a reaction solution containing a polyvalent metal salt and an ink composition containing a pigment and a resin emulsion for the purpose of preventing color bleeding while suppressing printing feathering and printing unevenness.

Patent Document 2 discloses an inkjet recording method for printing on a recording medium by using a reaction solution containing a polyvalent metal salt or polyallylamine and an ink composition for the purpose of improving fixability to the recording medium to obtain an image having excellent scratch resistance and water resistance. Patent Document 2 teaches that a colorant, self-crosslinking polymer microparticles having the property of forming a core-shell type film consisting of a core layer having an epoxy group and a shell layer having a carboxyl group, inorganic oxide colloid, a water-soluble organic solvent and water are contained in the ink composition in the method.

Patent Document 3 discloses an inkjet recording method which uses an aqueous ink containing a coloring material and an alginic acid to record on an inkjet recording medium containing a polyvalent metal compound in the surface layer of an ink-receiving layer formed on a substrate, in order to provide an inkjet recording method which suppresses bronzing after image recording and is capable of high-quality printing having excellent scratch resistance.

Patent Document 4 discloses a reaction solution for inkjet recording, comprising at least (1) a calcium salt or a magnesium salt, (2) an amine salt of sulfuric acid or an organic acid and (3) a liquid medium, wherein the concentration of the calcium ion or magnesium ion of the calcium salt or magnesium salt in the reaction solution is 0.2 to 0.8 mol/l and the concentration of the ammonium ion of the amine salt of sulfuric acid or an organic acid is 0.3 to 4.5 mol/l, in order to provide a reaction solution for inkjet recording which improves bleeding when printing is made on plain paper by an inkjet recording method, does not cause the penetration of ink to the rear side and is capable of forming a good image having fixability and color developability at the same time.

To improve the fixability to paper of the pigment, a denatured pigment obtained by binding a functional group having a predetermined calcium index to the surface of a pigment is proposed (see, for example, Patent Documents 5 and 6). Here, the calcium index indicates a measure of ability to coordination-bind dissolved calcium ions, that is, ability of the functional group which captures the calcium ions. The larger the calcium index is, the more strongly and more effectively the functional group coordination-binds the calcium ions.

The above Patent Documents 5 and 6 teach that when inkjet ink containing the denatured pigment is printed on printing paper, the denatured pigment interacts or binds with calcium carbonate or other divalent metal salts used in the coat paper and existing in or on the surface of the paper, with the result that the pigment is easily fixed to the paper.

PRIOR ART DOCUMENT

PATENT DOCUMENT

Patent Document 1: Japanese Patent Application No.1997-207424
Patent Document 2: Japanese Patent Application No.1999-034478
Patent Document 3: Japanese Patent Application No.2009-178912
Patent Document 4: Japanese Patent Application No.2010-005832
Patent Document 5: Japanese Patent Application No.2009-513802
Patent Document 6: Japanese Patent Application No.2009-515007

SUMMARY OF THE INVENTION

PROBLEMS TO BE SOLVED BY THE INVENTION

Patent Documents 1 and 2 disclose an inkjet recording method in which the ink composition containing a pigment is used to print on a position to which the reaction solution containing a polyvalent metal salt has been applied of the recording medium. However, Patent Documents 1 and 2 teach that an inorganic pigment or an organic pigment may be used as the pigment contained in the ink composition which is used in combination with the reaction solution containing a polyvalent metal salt without any special restrictions. Since Patent Documents 1 and 2 do not disclose the relationship between the selection of the pigment and fixability and there are various types of pigments, the fixability of ink may not be improved according to the type of a pigment.

Patent Document 3 discloses an inkjet recording method for recording on the inkjet recoding medium containing a polyvalent metal compound in the surface layer of the ink-receiving layer formed on the substrate by using the aqueous ink containing a coloring material and an alginic acid. Although Patent Document 3 teaches that various dyes and pigments may be used as the coloring material, there are various types of coloring materials and the relationship between the selection of the coloring material and fixability is not disclosed. Since the aqueous inkjet ink is not absorbed even when it is printed on a non-absorbing material and bleeds before it is dried, it is difficult to obtain a clear image. Therefore, an ink absorbing layer comprising silica microparticles and a water-soluble resin is formed on the recording medium in Patent Document 3.

Patent Document 4 discloses a reaction solution for inkjet recording, comprising (a) a calcium salt or a magnesium salt, (b) an amine salt of sulfuric acid or an organic acid, and (c) a liquid medium. Patent Document 4 teaches that examples of the color pigment ink include, but are not limited to, carbon black and color pigments such as a yellow pigment, a magenta pigment and a cyan pigment. However, it is assumed that there is a reaction solution which does not improve pigment fixability according to the type of a pigment.

Although the inkjet inks disclosed by Patent Documents 5 and 6 are aimed to improve fixability by using calcium carbonate contained in a paper agent, when coated paper such as coat paper and art paper and uncoated paper such as high-quality paper and middle-quality paper are printed by using the inkjet inks, it is preferable that a more clear image should be able to be printed by attaining the suppression of the feathering and color bleeding of an image.

EP 1 088 865 A1 discloses an inkjet recording method comprising the steps of: applying an ink-receiving solution prepared by dissolving in an aqueous solvent at least one metal salt having a water solubility of 0.1 mol/l or more, selected from calcium salts, magnesium salts, nickel salts and zinc salts having a valence of 2 or more, to at least the surface to be printed by using an inkjet ink or the entire surface of a recording medium; and printing on the metal salt adhered part by using the inkjet ink comprising at least a pigment, a resin emulsion and an aqueous solvent containing a surfactant, wherein a phosphorus-containing group having at least one P-O or P=O bond is bound to the surface of the pigment.

US 2007/100023 A1 and US 2007/100024 A1 disclose inkjet inks comprising at least a pigment, a resin emulsion and an aquaeous solvent containing a surfactant, wherein a phosphorous-containing group having at least one P-O or P=O bond is bound to the surface of the pigment.

It is an object of the present invention which was made in the view of the above situation to provide an inkjet ink recording method capable of obtaining a clear image by suppressing feathering and color bleeding even when an absorbing material or a non-absorbing material is used as a recording medium.

MEANS FOR SOLVING THE PROBLEM

In view of the above problems of the prior art, the inventors of the present invention found that a clear image can be obtained by significantly suppressing feathering and color bleeding by applying an ink-receiving solution containing a specific metal salt such as a calcium salt or a magnesium salt to a recording medium and printing on the applied part by using an inkjet ink containing a pigment having a phosphorus-containing group, a resin emulsion and an aqueous solvent containing a surfactant. The present invention was accomplished based on this finding. That is, the present invention includes the following inventions (1) to (16).
(1) An inkjet recording method comprising the steps of:

applying an ink-receiving solution prepared by dissolving in an aqueous solvent at least one metal salt having a water solubility of 0.1 mol/l or more, selected from calcium salts, magnesium salts, nickel salts and zinc salts having a valence of 2 or more, to at least the surface to be printed by using an inkjet ink or the entire surface of a recording medium; and
printing on the metal salt adhered part by using the inkjet ink comprising at least a pigment, a resin emulsion and an aqueous solvent containing a surfactant, wherein a phosphorus-containing group having at least one P-O or P=O bond is bound to the surface of the pigment and the conductance of an aqueous solution containing 1 mass% of a solid content of the resin emulsion is 300 $\mu$S/cm or less.

(2) The inkjet recording method in the above paragraph (1), wherein the metal salt is a chloride, acetate or nitrate of calcium, magnesium, nickel or zinc.
(3) The inkjet recording method in the above paragraph (1), wherein the metal salt is calcium chloride or magnesium chloride.
(4) The inkjet recording method in the above paragraph (1), wherein the metal salt is an organic acid salt of calcium, magnesium, nickel or zinc.
(5) The inkjet recording method in any one of the above paragraphs (1) to (4), wherein the concentration of the metal salt in the ink-receiving solution is 0.05 to 2.0 mol/l.
(6) The inkjet recording method in the above paragraph (1), wherein the amount of the ink-receiving solution applied to the recording medium is 0.01 to 2000 $\mu$mol/cm$^2$ as a metal salt.
(7) The inkjet recording method in the above paragraph (1), wherein the ink-receiving solution is applied to the recording medium by at least one method selected from spray, coating, inkjet, gravure and flexographic methods.
(8) The inkjet recording method in the above paragraph (1), wherein the recording medium is coated paper or uncoated paper.
(9) The inkjet recording method in the above paragraph (1), wherein the recording medium is cloth.
(10) The inkjet recording method in the above paragraph (1), wherein the recording medium is a non-absorbing substrate.
(11) The inkjet recording method in the above paragraph (1), wherein the phosphorus-containing group is at least one selected from phosphonic acid group, phosphinic acid group, phosphinous acid group, phosphite group, phosphate group, diphosphate group, triphosphate group, pyrophosphate group, and partial esters and salts thereof.
(12) The inkjet recording method in the above paragraph (1), wherein the phosphorus-containing group has a larger calcium index than the calcium index of 1,2,3-benzenetricarboxylic acid.
(13) The inkjet recording method in the above paragraph (1), wherein the average particle diameter of the resin emulsion is 500 nm or less.
(14) The inkjet recording method in the above paragraph (1), wherein the inkjet ink contains 0.05 to 20 mass% of the resin emulsion as a solid content.
(15) The inkjet recording method in the above paragraph (1), wherein the inkjet ink contains 0.05 to 20 mass% of the pigment and 0.05 to 20 mass% of the resin emulsion as a solid content, and has a total solid content of the pigment and the resin emulsion of 0.1 to 30 mass%.

EFFECT OF THE INVENTION

4

(a) In the inkjet recording method in the above paragraph (1), since the metal salt contained in the ink-receiving solution of the present invention is adhered to a part to be printed by inkjet ink or the entire surface of the recording medium, the phosphorus-containing group bound to the surface of the pigment in the ink acts on the metal salt contained in the ink-receiving solution to greatly improve fixability to the recording medium, thereby markedly suppressing feathering and color bleeding and the influence of ionic groups, counter ions of these groups and ionic impurities contained in the resin emulsion upon the dispersibility of a pigment dispersion in the inkjet ink is reduced, thereby making it possible to achieve excellent storage stability with the result that a clear image can be obtained..

(b) In the inkjet recording method in the above paragraph (2), when the metal salt is a chloride, acetate or nitrate of calcium, magnesium, nickel or zinc, fixability is further improved, thereby making it possible to obtain a clear image.

(c) In the inkjet recording method in the above paragraph (3), when the metal salt is calcium chloride or magnesium chloride, fixability is further improved, thereby making it possible to obtain a clear image.

(d) In the inkjet recording method in the above paragraph (4), when the metal salt is an organic acid salt, fixability is further improved, thereby making it possible to obtain a clear image.

(e) In the inkjet recording method in the above paragraph (5), when the concentration of the metal salt in the ink-receiving solution is 0.05 to 2.0 mol/l, the metal salt can be easily adhered to the recording medium, thereby further improving the fixability to the recording medium of the pigment.

(f) In the inkjet recording method in the above paragraph (6), when the amount of the ink-receiving solution applied to the recording medium is 0.01 to 2000 $\mu$mol/cm$^2$ as a metal salt, the metal salt is adhered to the recording medium in a suitable amount, thereby further improving the fixability to the recording medium of the pigment.

(g) In the inkjet recording method in the above paragraph (7), when the ink-receiving solution is applied to the recording medium by at least one method selected from spray, coating, inkjet, gravure and flexographic methods, it is easy to apply the ink-receiving solution to a part to be printed by the pigment of the recording medium in advance.

(h) In the inkjet recording method in the above paragraph (8), when uncoated paper such as high-quality paper or recycled paper is used as the recording medium, feathering can be significantly suppressed, and when coated paper such as coat paper or art paper is used, color bleeding can be significantly suppressed.

(i) In the inkjet recording method in the above paragraph (9), when cloth is used as the recording medium, feathering and color bleeding can be significantly suppressed.

(j) In the inkjet recording method in the above paragraph (10), when a non-absorbing substrate is used as the recording medium, feathering and color bleeding can be significantly suppressed.

(k) In the inkjet recording method in the above paragraph (11), when the phosphorus-containing group is at least one selected from phosphonic acid group, phosphinic acid group, phosphinous acid group, phosphite group, phosphate group, diphosphate group, triphosphate group, pyrophosphate group, and partial esters and salts thereof, reactivity between the phosphorus-containing group and the above metal salt is improved, thereby improving the fixability to the recording medium of the pigment so that a clear image can be obtained.

(l) In the inkjet recording method in the above paragraph (12), when a functional group having a larger calcium index than the calcium index of 1,2,3-benzenetricarboxylic acid is bound to the surface of the pigment, the feathering and color bleeding of the pigment are further suppressed, thereby improving the fixability to the recording medium so that a more clear image can be obtained.

(m) In the inkjet recording method in the above paragraph (14), when the average particle diameter of the resin in the ink is 500 nm or less, the scratch resistance of an image is improved.

(n) In the inkjet recording method in the above paragraph (15), when the modified resin emulsion is contained in the inkjet ink in an amount of 0.05 to 20 mass% as a solid content, the fixability to the recording medium of the pigment is improved.

(o) In the inkjet recording method in the above paragraph (16), when the inkjet ink contains 0.05 to 20 mass% of the pigment as a solid content and 0.05 to 20 mass% of the resin emulsion as a solid content and has a total solid content of the pigment and the resin emulsion of 0.1 to 30 mass%, a print product having high resolution and little ink feathering and color bleeding can be obtained.

BRIEF DESCRIPTION OF THE DRAWINGS

Fig. 1 shows a photograph for explaining the evaluation of feathering in Example 1;
Fig. 2 shows a photograph for explaining the evaluation of feathering in Example 2;
Fig. 3 shows a photograph for explaining the evaluation of feathering in Comparative Example 1;
Fig. 4 shows a photograph for explaining the evaluation of feathering in Comparative Example 2;
Fig. 5 shows a photograph for explaining the evaluation of feathering in Comparative Example 3;
Fig. 6 shows a photograph for explaining the evaluation of feathering in Comparative Example 4;

Fig. 7 shows a photograph for explaining the evaluation of feathering in the offset printing of Reference Example 1;
Fig. 8 shows a photograph for explaining the evaluation of color bleeding in Example 11;
Fig. 9 shows a photograph for explaining the evaluation of color bleeding in Example 12;
Fig. 10 shows a photograph for explaining the evaluation of color bleeding in Example 13;
Fig. 11 shows a photograph for explaining the evaluation of color bleeding in Example 14;
Fig. 12 shows a photograph for explaining the evaluation of color bleeding in Comparative Example 6;
Fig. 13 shows a photograph for explaining the evaluation of color bleeding in Comparative Example 7;
Fig. 14 shows a photograph for explaining the evaluation of color bleeding in Comparative Example 8;
Fig. 15 shows a photograph for explaining the evaluation of feathering in Example 3;
Fig. 16 shows a photograph for explaining the evaluation of feathering in Example 10;
Fig. 17 shows a photograph for explaining the evaluation of feathering in Comparative Example 5;
Fig. 18 shows a photograph for explaining the evaluation of bleeding and color unevenness in Example 18; and
Fig. 19 shows a photograph for explaining the evaluation of bleeding and color unevenness i in Comparative Example 10.

EMBODIMENTS OF CARRYING OUT THE INVENTION

The inkjet ink and the print product of the present invention will be described in detail hereinunder.

The inkjet recording method of the present invention comprises the steps of

applying an ink-receiving solution prepared by dissolving in an aqueous solvent at least one metal salt having a water solubility of 0.1 mol/l or more, selected from calcium salts, magnesium salts, nickel salts and zinc salts having a valence of 2 or more, to at least the surface to be printed by using an inkjet ink or the entire surface of a recording medium; and

printing on the metal salt adhered part by using the inkjet ink comprising at least a pigment, a resin emulsion and an aqueous solvent containing a surfactant, wherein
a phosphorus-containing group having at least one P-O or P=O bond is bound to the surface of the pigment.

A description is subsequently given of (I) a recording medium, (II) an ink-receiving solution and an application method thereof and (III) an inkjet ink and a printing method thereof.

(I) recording medium

In the inkjet recording method of the present invention, the recording medium to be printed by using the inkjet ink is not particularly limited, and an absorbing material such as coated paper, uncoated paper or cloth and a non-absorbing material may be used. Examples of the absorbing material include uncoated paper such as groundwood paper, middle-quality paper and high-quality paper, coated paper such as coat paper and art paper, cotton, nylon fabrics, silk, hemp, cloth, unwoven cloth and leather. Examples of a non-absorbing substrate as the non-absorbing material include, but are not limited to, polyester-based resin, polypropylene-based synthetic paper, vinyl chloride resin, polyimide resin, metals, metal foil coat paper, glass, synthetic rubbers and natural rubbers.

To obtain the effect of suppressing feathering and color bleeding markedly, uncoated paper such as high-quality paper and reclaimed paper, and coated paper such as coat paper and art paper are preferably used. When uncoated paper such as high-quality paper or reclaimed paper is used as a recording medium, feathering can be significantly suppressed and when coated paper such as coat paper or art paper, or a non-absorbing material is used, color bleeding can be significantly suppressed.

The inkjet recording method of the present invention is characterized in that printing is carried out on a recording medium by using an inkjet ink to form an image. According to the present invention, since the above inkjet ink is used to print on a part to which an ink-receiving solution containing a metal salt has been applied, a clear image can be obtained by suppressing feathering and color bleeding regardless of the type of the recording medium.

(II) ink-receiving solution and application method thereof

The ink-receiving solution of the present invention is prepared by dissolving in an aqueous solvent at least one metal salt having a water solubility of 0.1 mol/l or more, selected from calcium salts, magnesium salts, nickel salts and zinc salts having a valence of 2 or more.

(1) Metal salt

The metal salt which can be used herein is composed of a polyvalent metal ion having a valence of 2 or more and an anion bonded to the polyvalent metal ion. Examples of the polyvalent metal ion having a valence of 2 or more include calcium ion, magnesium ion, aluminum ion, titanium ion, Fe(II) ion, Fe(III) ion, cobalt ion, nickel ion, copper ion, zinc ion, barium ion and strontium ion. Out of these, at least one having a water solubility of 0.1 mol/l or more, selected from calcium salts, magnesium salts, nickel salts and zinc salts, is preferred.
The metal ion of a metal salt having a water solubility of less than 0.1 mol/l may scarcely dissolve into an aqueous ink, whereby reactivity between the metal ion and the phosphorus-containing group bound to the pigment becomes unsatisfactory and the improvement of fixability of the pigment may become unsatisfactory. Both inorganic salts and organic acid salts listed below may be used as the metal salt.

(a) Inorganic salt

Out of the above inorganic salts, the calcium salts and the magnesium salts include, but are not limited to, calcium chloride, magnesium chloride, calcium bromide, magnesium bromide, calcium nitrate, magnesium nitrate and magnesium sulfate. Out of these inorganic salts, chlorides, acetates and nitrates all of which generally have high water solubility are preferred. Further, out of these inorganic salts, calcium chloride and magnesium chloride are more preferred and calcium chloride is particularly preferred from the viewpoints of water solubility and reactivity with the phosphorus-containing group.

(b) Organic acid salt

Specific examples of the above organic acid salt include, but are not limited to, calcium salts, magnesium salts, nickel salts and zinc salts of pantothenic acid, pantoic acid, propionic acid, ascorbic acid, acetic acid and lactic acid. Out of these organic acid salts, calcium salts of pantothenic acid, propionic acid and acetic acid are preferred because they suppress feathering and color bleeding.

(2) Solvent

Preferably, the solvent used in the ink-receiving solution is an aqueous solvent, dissolves the above metal salt, is penetrated into the recording medium when the ink-receiving solution is applied to the surface of the recording medium after it is formed and capable of forming a state that the metal salt is adhered to the surface of the recording medium.
Examples of the water-soluble organic solvent in the present invention includes alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol and n-pentanol; monohydric alcohols such as 3-methoxy-3-methyl-1-butanol, 3-methoxy-1-propanol, 1-methoxy-2-propanol and 3-methoxy-n-butanol; amides such as dimethylformamide and dimethylacetamide; ketones and ketoalcohols such as acetone and diacetone alcohol; ethers such as tetrahydrofuran and dioxane; oxyethylene and oxypropylene copolymers such as polyethylene glycol and polypropylene glycol; diols such as ethylene glycol, propylene glycol, diethylene glycol, dipropylene glycol, 1,3-propylene glycol, isopropylene glycol, isobutylene glycol, trimethylene glycol, triethylene glycol, tripropylene glycol, tetraethylene glycol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol and 3-methyl-1,5-pentanediol; triols such as glycerin, trimethylolethane, trimethylolpropane and 1,2,6-hexanetriol; tetrahydric alcohols such as mesoerythritol and pentaerythritol; monoalkyl ethers such as ethylene glycol monomethyl (or ethyl, isopropyl, n-butyl, isobutyl, n-hexyl or 2-ethylhexyl)ether, diethylene glycol monomethyl (or ethyl, isopropyl, n-butyl, isobutyl, n-hexyl or 2-ethylhexyl)ether, triethylene glycol monomethyl (or ethyl, isopropyl, n-butyl or isobutyl)ether, propylene glycol monomethyl (or ethyl, isopropyl, n-butyl or isobutyl)ether and dipropylene glycol monomethyl (or ethyl, isopropyl, n-butyl or isobutyl)ether; dialkyl ethers of a polyhydric alcohol such as diethylene glycol dimethyl ether, diethylene glycol diethyl ether, diethylene glycol ethyl methyl ether, triethylene glycol dimethyl ether, triethylene glycol diethyl ether, tetraethylene glycol dimethyl ether, tetraethylene glycol diethyl ether, propylene glycol dimethyl ether, propylene glycol diethyl ether, dipropylene glycol dimethyl ether and dipropylene glycol diethyl ether; alkanolamines such as monoethanolamine, diethanolamine, triethanolamine, N-methylethanolamine, N-ethylethanolamine, N-butylethanolamine, N-methyldiethanolamine, N-ethyldiethanolamine and N-butyldiethanolamine; nitrogen-containing heterocyclic compounds such as N-methyl-2-pyrrolidone, 2-pyrrolidone and 1,3-dimethyl-2-imidazolidinone; and cyclic compounds such as γ-butyrolactone and sulfolane. These water-soluble organic solvents may be used either singly or in combinations thereof.
When the ink-receiving solution is applied by using an ink jet system, a high-boiling organic solvent such as ethylene glycol, diethylene glycol, triethylene glycol, polyethylene glycol or polypropylene glycol triethanolamine may be used. When a paper substrate is used as the recording medium, use of a combination of water and a water-soluble organic solvent can suppress curling and cockling.

(3) Ink-receiving solution

The concentration of the above metal salt in the ink-receiving solution can be suitably set to a suitable range by reactivity with the phosphorus-containing group on the surface of the pigment, printing quality and coating system but preferably 0.005 to 2.0 mol/l more preferably 0.01 to 1.0 mol/l and even more preferably 0.05 to 0.5 mol/l When the concentration of the metal salt is 0.05 mol/l or more, the effect of suppressing feathering and color bleeding tends to be exhibited and even when the concentration of the metal salt is made higher than the above range, the further improvement of the effect is not seen but new problems arise such as the production of a deposit and an increase in viscosity.

The amount of the ink-receiving solution applied to the recording medium is preferably about 0.01 to 2000 $\mu$mol/cm$^2$ as a metal salt in order to achieve the effect of the present invention. When the amount of the metal salt adhered is 0.01 $\mu$mol/cm$^2$ or more, the effect of suppressing the feathering and color bleeding of the pigment of the present invention is exhibited markedly.

(4) Method of applying ink-receiving solution to recording medium

The method of applying the above ink-receiving solution to the recording medium is not particularly limited but preferably at least one selected from spray, coating, inkjet, gravure and flexographic methods. By employing the above method to apply the ink-receiving solution to the recording medium, the ink-receiving solution can be applied to a position where the pigment is to be printed of the recording medium in advance.

The time of adhering the metal salt to the recording medium is not particularly limited if it is before printing is carried out by using the inkjet ink. A recording medium to which the above metal salt has been adhered by applying the ink-receiving solution to the recording medium may be acquired to print by using the inkjet ink of the present invention, or right after the ink-receiving solution is applied to the recording medium, printing may be carried out by using the inkjet ink. A great effect is obtained by carrying out printing right after the application.

(III) Inkjet ink and printing method thereof

The inkjet ink of the present invention contains at least a pigment, a resin emulsion and an aqueous solvent containing a surfactant. In the inkjet ink, a phosphorus-containing group having at least one P-O or P=O bond is bound to the surface of the pigment.

The pigment is generally dispersed in a dispersion medium, and the obtained pigment dispersion is added to an aqueous solvent for inkjet inks together with the resin emulsion and the surfactant.

(1) Pigment dispersion

If inkjet inks are classified by the coloring material to be used, they are classified into a dye ink and a pigment ink. The pigment ink is superior to the dye ink in image preserving characteristics such as light resistance, water resistance and gas resistance and the utilization of the pigment ink for inkjet recording is under progress. A pigment ink is used in the present invention.

A pigment exists as particles in ink and basically develops a color through a crystal structure. To obtain an inkjet ink by adding a pigment, in general, the pigment is added as a pigment dispersion containing the pigment dispersed in a dispersion medium.

As a method of dispersing a pigment in the inkjet ink, there are two types, that is, a resin dispersion type and self dispersion type. The resin dispersion type is a method in which a pigment is dispersed by a polymer dispersant (surfactant). The polymer dispersant can more stably disperse a pigment than a low-molecular weight surfactant because a steric repulsion effect works besides electrostatic repulsion among particles caused by charge. The self dispersion type is one which disperses by directly modifying the surface of the pigment with a hydrophilic group, and this can be done by surface modification in which at least one functional group selected from a carbonyl group, carboxyl group, hydroxyl group and sulfonic acid group or salt thereof is bound as the hydrophilic group. In the present invention, the surface of the pigment must be modified with a phosphorus-containing group having at least one P-O or P=O bond and may be further modified with another hydrophilic group.

The average primary particle diameter (D50) of the pigment may be designed to be, for example, in a range of 5 nm to 200 nm and preferably in a range of 30 nm to 150 nm. This is because irregular reflection of pigment particles in a print image portion can be prevented and also, a print image having a uniform density can be provided when the particle diameter of the pigment is designed to be a specified particle diameter. When the average primary particle diameter of the pigment exceeds 200 nm, irregular reflection of pigment particles in a print image portion is caused, bringing about deteriorated image chroma and uneven density. The average primary particle diameter of the pigment in the present invention is a value measured at 23 °C under 55% RH by a grain size analyzer (manufactured by Nikkiso Co., Ltd., model: Microtrack UPA). As the pigment, an organic pigment may be used. Also, carbon black which is an inorganic pigment may also be used. As the color of the pigment, any of blue, black, brown, cyan, green, white, violet, magenta, red, orange and yellow may be adopted. A mixture of pigments having different colors may be used.

As for a method of producing the pigment obtained by binding a phosphorous-containing group having at least one P-O or P=O bond to the surface thereof, for example, the methods described in US Patent No. 5,554,739, US Patent No. 5,707,432 and US Patent No. 5,837,045 may be adopted. The form of the pigment may be any of a solid form such as a powder or a paste or a dispersion solution form. For example, the pigment may be prepared in the form of a dispersion solution and may be isolated in the form of solid from the dispersion solution by spray drying. The pigment preferably has the form of a dispersion solution. In this case, this is a pigment dispersion. The pigment dispersion may be purified by cleaning including, for example, filtration or centrifugation or a combination of these two methods to remove unreacted raw materials, by-produced salts and other reaction impurities. The product may be isolated, for example, by vaporization or may be recovered by filtration and drying. No particular limitation is imposed on the content of the pigment of the pigment dispersion as long as sufficient image density can be attained. Specifically, the content of the pigment of the pigment dispersion is preferably in a range of 0.05 to 20 mass% based on the total amount of the inkjet ink. In this case, water or a water-soluble organic solvent may be used as the dispersion medium.

(2) Phosphorus-containing group

To improve the fixability of the pigment by making use of reactivity with a metal ion contained in the recording medium, at least one phosphorus-containing group having at least one P-O or P=O bond must be bound to the surface of the pigment. The phosphorus-containing group is at least one selected from phosphonic acid group, phosphinic acid group, phosphinous acid group, phosphite group, phosphate group, diphosphate group, triphosphate group, pyrophosphate group, and partially esters and salts thereof. Among these groups, the phosphorus-containing group preferably contains at least one phosphonic acid group, or partial ester or salt thereof and particularly preferably contains at least two phosphonic acid groups, or esters or salts thereof. Here, "partial ester thereof' means that the phosphonic acid group is a partial phosphonate ester group having the formula $-PO_3RH$ or salt thereof. Here, R is an aryl, alkaryl, aralkyl or alkyl group.

(2-1) Type of phosphorus-containing group

Examples of the phosphorus-containing group having at least one P-O or P=O bond include the following phosphorus-containing groups (a) to (i).
The phosphorus-containing group of the present invention is not limited to these.

(a) When the phosphorus-containing group contains at least two phosphonic acid groups or salts thereof, one or both of these phosphonic acid groups may be a partial phosphonate ester group. Also, one of these phosphonic acid groups may be a phosphonate ester having the formula $-PO_3R_2$, and the other is any one of a partial phosphonate ester group, phosphonic acid group and salt thereof. Among these groups, at least one of these phosphonic acid groups is preferably a phosphonic acid, partial ester or salt thereof. Here, "salt thereof' means that the phosphonic acid group has a cation counter ion and is partially or completely ionized.

When the functional group contains at least two phosphonic acid groups, one or both of these phosphonic acid groups may be in either a partially ionized form or completely ionized form. Particularly, it is preferable that the functional group should contain at least two phosphonic acid groups and one or both of these phosphonic acid groups should have the formula $-PO_3H_2$, $-PO_3H^-M^+$ (monobasic salt) or $-PO_3^{-2}M^{+2}$ (dibasic salt). Here, $M^+$ is a cation such as $Na^+$, $K^+$, $Li^+$ or $NR_4^+$. R may be the same or different and each represent hydrogen or an organic group (for example, substituted or unsubstituted aryl and/or alkyl group).

(b) When the phosphorus-containing group contains at least two phosphonic acid groups, examples of the functional group may include groups containing at least one geminal bisphosphonic acid group, partial ester or salt thereof. Specifically, examples of the functional group include groups containing at least two phosphonic acid groups directly bound to the same carbon atom, partial esters or salts thereof. Such a group is sometimes called a 1,1-diphosphonic acid group, or partial ester or salt thereof.

Examples of such a phosphorus-containing group include groups having the formula $-CQ(PO_3H_2)_2$, and groups containing partial esters or salts thereof. Q is bound to the geminal position and represents H, R, OR, SR or $NR_2$ (here, R may be the same or different and each represent H, $C_1$ to $C_{18}$ ($C_1$ to $C_{18}$ means that the number of carbon atoms is 1 to 18, the same shall apply hereinafter) saturated or unsaturated branched or non-branched alkyl group,

$C_1$ to $C_{18}$ saturated or unsaturated branched or non-branched acyl group, aralkyl group, alkaryl group or aryl group).
Q is, for example, H, R, OR, SR or $NR_2$ (here, R may be the same or different and each represent H or $C_1$ to $C_6$ alkyl group or aryl group), and preferably H, OH or $NH_2$. Moreover, examples of the above functional group include groups having the formula $-(CH_2)_n-CQ(PO_3H_2)_2$, and groups containing partial esters or salts thereof. Here, Q is that mentioned above.

n is 0 to 9, preferably 0 to 3 and even more preferably 0 or 1.

(c) Examples of the above functional group include groups having the formula $-X-(CH_2)_n-CQ(PO_3H_2)_2$, and groups containing partial esters or salts thereof. Here, Q and n are those mentioned above. X represents an arylene group, heteroarylene group, alkylene group, vinylidene group, alkalylene group, aralkylene group, or cyclic or heterocyclic group. X is preferably an arylene group (may be further substituted with one or more optional groups such as alkyl groups or aryl groups) such as a phenylene group, naphthalene group or biphenylene group. When X is an alkylene group, examples of X include substituted or unsubstituted alkylene groups (may be branched or non-branched, or may be substituted with one or more groups (for example, aromatic groups)). Also, examples of X include $C_1$ to $C_{12}$ groups such as a methylene group, ethylene group, propylene group and butylene group. X is preferably bound directly to the pigment. This means that neither other atom nor group exists between the pigment and X.

X may be further substituted with one or more organic groups. Examples of such an organic group include R', OR', COR', COOR', OCOR', carboxylate, halogen, CN, $NR'_2$, $SO_3H$, sulfonate, sulfate, NR'(COR'), $CONR'_2$, imide, $NO_2$, phosphate, phosphonate, N=NR', SOR', $NR'SO_2R'$ and $SO_2NR'_2$. Here, R' may be the same or different and each independently represent hydrogen, or branched or non-branched $C_1$ to $C_{20}$ substituted or unsubstituted and saturated or unsaturated hydrocarbon (for example, alkyl, alkenyl, alkinyl, substituted or unsubstituted aryl, substituted or unsubstituted heteroaryl, substituted or unsubstituted alkaryl, or substituted or unsubstituted aralkyl).

(d) Moreover, examples of the above functional group include groups having the formula $-X-Sp-(CH_2)_n-CQ(PO_3H_2)_2$, and groups containing partial esters or salts thereof. Here, X, Q and n are those mentioned above. Sp is a spacer group (connector between two groups). Examples of Sp include binding or connecting groups. Examples of the connecting group include $-CO_2-$, $-O_2C-$, -CO-, $-OSO_2-$, $-SO_3-$, $-SO_2-$, $-SO_2C_2H_4O-$, $-SO_2C_2H_4S-$, $-SO_2C_2H_4NR''-$, -O-, -S-, -NR''-, -NR''CO-, -CONR''-, $-NR''CO_2-$, $-O_2CNR''-$, -NR''CONR''-, -N(COR'')CO-, -CON(COR'')-, $-NR''COCH(CH_2CO_2R'')-$ and its cyclic imide, $-NR''COCH_2CH(CO_2R'')-$ and its cyclic imide, $-CH(CH_2CO_2R'')CONR''-$ and its cyclic imide, $-CH(CO_2R'')CH_2CONR''-$ and its cyclic imide (including phthalimide and maleimide), sulfonamide group (including $-SO_2NR''-$ and $-NR''SO_2-$ group), arylene group and alkylene groups. R'' may be the same or different and each represent hydrogen or an organic group (for example, a substituted or unsubstituted aryl group or alkyl group). As shown by the structure of the above formula, the group containing at least two phosphonic acid groups or salt thereof is bound to X through the spacer group Sp. Sp is preferably $-CO_2$ $-O_2C-$, -O-, -NR''-, -NR''CO-, or -CONR''-, $-SO_2NR''-$, $-SO_2CH_2CH_2NR''-$, $-SO_2CH_2CH_2O-$ or $-SO_2CH_2CH_2S-$ (here, R'' is H or a $C_1$ to $C_6$ alkyl group).

(e) Also, when the functional group contains at least two phosphonic acid groups, examples of the functional group may include groups having at least one formula $-N-[(CH_2)_m(PO_3H_2)]_2$, and groups containing partial ester or salt thereof. Here, m may be the same or different, denote 1 to 9, preferably 1 to 3, and more preferably 1 or 2. Also, when the functional group contains at least two phosphonic acid groups, examples of the functional group may include groups having at least one formula $-(CH_2)_n-N-[(CH_2)_m(PO_3H_2)]_2$, and groups containing partial ester or salt thereof. Here, n denotes 0 to 9 (for example, 1 to 9), and preferably 0 to 3 (for example, 1 to 3). m is the same as that mentioned above. Also, when the functional group contains at least two phosphonic acid groups, examples of the functional group may include groups having at least one formula $-X-(CH_2)_n-N-[(CH_2)_m(PO_3H_2)]_2$, and groups containing partial ester or salt thereof. Here, X, m and n are the same as those mentioned above. X is preferably an arylene group. Also, when the functional group contains at least two phosphonic acid groups, examples of the functional group may include groups having at least one formula $-X-Sp-(CH_2)_n-N-[(CH_2)_m(PO_3H_2)]_2$, and groups containing partial ester or salt thereof. Here, X, m, n and Sp are the same as those mentioned above.

(f) Also, when the functional group contains at least two phosphonic acid groups, examples of the functional group may include groups having at least one formula $-CR=C(PO_3H_2)_2$, and groups containing partial ester or salt thereof. Here, R represents H, $C_1$ to $C_{18}$ saturated or unsaturated and branched or non-branched alkyl group, $C_1$ to $C_{18}$ saturated or unsaturated and branched or non-branched acyl group, aralkyl group, alkaryl group or aryl group. R is preferably H, $C_1$ to $C_6$ alkyl group or aryl group.

(g) Furthermore, when the functional group contains at least two phosphonic acid groups, the functional group may be a group containing two or more phosphonic acid groups, or a group containing partial ester or salt thereof. Examples of such a functional group include groups having the formula $-X-[CQ(PO_3H_2)_2]_p$, and groups containing partial ester or salt thereof. X and Q are the same as those mentioned above. X is preferably an arylene group, heteroarylene group, alkylene group, alkalylene group or aralkylene group. p denotes 1 to 4 and preferably 2.

(h) Also, when the functional group contains at least two phosphonic acid groups, the functional group may be a group containing at least one vicinal bisphosphonic acid group, or partial ester or salt thereof. This means that these groups are adjacent to each other. Examples of such a functional group include groups containing two phosphonic acid groups bonded to adjacent carbon atoms, and partial esters and salts thereof. Such a group is called 1,2-diphosphonic acid group, or partial ester or salt thereof. Examples of the group containing two phosphonic acid groups, or partial esters or salts thereof include aromatic groups and alkyl groups. Examples of the vicinal bisphosphonic acid group include vicinal alkyl groups, vicinal aryldiphosphonic acid groups, and partial esters and salts thereof. Specific examples of the functional group include groups having the formula $-C_6H_3-(PO_3H_2)_2$, and groups containing partial ester or salt thereof. Here, the acid, ester or base groups are each located at ortho-positions to each other.

(i) Other phosphorus-containing groups

A reactive surfactant having phosphorus may be used as a monomer having a phosphorus-containing group. As a phosphate type reactive surfactant having a P=O bond, ADEKA REASOAP PP-70, SDX-334, SDX-731 and the like manufactured by ADEKA Corporation and H-3330PL and the like manufactured by Dai-ichi Kogyo Seiyaku Co., Ltd. are commercially available.

Here, the molecular formula of ADEKA REASOAP PP-70 is $[CH_2=CHCH_2O(CH_2C(CH_3)HO)_m]_LP(=O)-(OH)_3-)_{3-L}$ (L: 1 or 2).

Also, as the monomer containing a phosphorous-containing functional group having at least one P-O or P=O bond and a polymerizable double bond, $CH2=CH-\phi-P(O)(OH)_2$, $CH_2=CH-\phi-OP(O)(OR)_2$, $CH2=CH-\phi-OP(S)(OR)_2$ and $CH_2=CH-\phi-OP(O)CIR$ (in the above formulas, $\phi$ represents a benzene ring, and R represents an alkyl group having 1 to 6 carbon atoms) may be exemplified, and further, monomers disclosed in Japanese Patent Application No. 2000-178478, 2000-314030 and 1991-095209 may be used.

(2-2) Calcium index of phosphorus-containing group

If at least one phosphorous-containing group having at least one P-O or P=O bond is bound to the surface of the pigment, the effect of restraining the penetration of a pigment into a recording medium to thereby limit bleeding will be exhibited, as mentioned above. In this case, the phosphorous-containing group preferably has a larger calcium index than the calcium index of 1,2,3-benzenetricarboxylic acid. Here, the calcium index indicates a measure of ability to coordination-bind dissolved calcium ions, that is, ability of the functional group which captures the calcium ions. The larger the calcium index is, the more strongly and more effectively the functional group coordination-binds the calcium ions.

According to Patent Document 5, when an inkjet ink containing a pigment component having a phosphorus-containing group bound thereto as mentioned above is printed on printing paper, the phosphorus-containing group interacts or binds with a calcium salt or another divalent metal salt existing in or on the surface of the printing paper, with the result that the pigment is easily fixed to the paper.

As described in Patent Document 5, as a method of measuring the calcium index, for example, a method measuring the amount of calcium coordination-bound by a compound in a standard solution containing soluble calcium ions and a color indicator using ultraviolet-visible spectroscopy may be adopted. Also, the calcium index of a compound having a deep color may be measured by using the NMR method. Each method will be explained hereinunder.

(a) Ultraviolet-visible spectroscopy

An example of the ultraviolet-visible spectroscopy will be described.

First, a series of solutions containing 0.087 mM of a congo-red indicator, 5 mM of cesium chloride, 1 mass% of polyethylene glycol methyl ether having a molecular weight (MW) of 350 and calcium chloride having a concentration in a range of 0 mM to 7 mM (0.2, 0.5, 1, 2, 3, 4, 4.5, 5, 6, and 7 mM) are prepared at pH of 9. The ultraviolet-visible spectrums of these solutions are recorded using an ultraviolet-visible absorptiometer (manufactured by Shimadzu Corporation, model: UV-2501PC) within one hour after these solutions are prepared. Using these spectrums, a calibration curve showing the relation between the absorbance at 520 nm and the concentration of calcium is formed.

Next, a compound corresponding to a specific functional group bound to the surface of a resin is selected. With regard to, for example, a surface-treated resin with a 3,4,5-tricarboxyphenyl group or salt thereof bound to the surface thereof, 1,2,3-benzenetricarboxylic acid is selected. Then, an inspection solution containing 0.087 mM of a congo-red indicator, 1 mass% of polyethylene glycol methyl ether having a MW of 350, 5 mM of calcium chloride and a cesium salt of a relative compound having an ion concentration of 5 mM at pH of 9 is prepared at pH of 9. The concentration of non-complexed calcium is determined by comparison with the calibration curve. In succession, the calcium index is calculated as $\log_{10}((0.005\text{-Non-complexed calcium})/((\text{Non-complexed calcium})^2))$. A duplicate test is made to measure and measured data is averaged.

The above ultraviolet-visible spectroscopy is used to determine the calcium indices of various compounds relating to functional groups in the surface-treated resin. Specific examples are shown in Table 1 below.

[Table 1]

| Chemical Compound | Calcium index |
|---|---|
| Toluenesulfonic acid | 0,78 |
| Benzoic acid | 1,27 |
| Isophthalic acid | 1,76 |
| Phthalic acid | 2,05 |
| Succinic acid | 2,37 |
| Benzohydroxamic acid | 2,43 |
| 1,2,4-benzenetricarboxylic acid | 2,53 |
| Benzenephosphonic acid | 2,53 |
| 1,2,3-benzenetricarboxylic acid | 2,79 |
| 2,3-dihydroxypyridine | 3,06 |
| 8-hydroxyquinoline | 3,08 |
| 2-hydroxypyridine oxide | 3,27 |
| Methylenediphosphonic acid | 3,45 |

As shown by the data in Table 1, 2-hydroxypyridine N-oxide (1-hydroxypyridone), 8-hydroxyquinoline and methylenediphosphonic acid each have a larger calcium index than the calcium index of 1,2,3-benzenetricarboxylic acid. It is expected that compounds containing these functional groups or similar functional groups (for example, groups containing other bisphosphonates or at least two phosphonic acid groups, partial esters or salts thereof) each likewise have a large calcium index.

(b) NMR method

As to compounds having difficulty in the application of the above ultraviolet-visible spectroscopy because they have a deep color, the NMR method may be used. An example of the NMR method will be explained.

First, an aqueous solution which is 0.01 M for $^{43}CaCl_2$, 0.01 M for NaCl and 10% for $D_2O$ and having a pH of 8 or 9 is prepared from $^{43}CaCOa$, $HCl/D_2O$, $NaOH/D_2O$, $D_2O$ and water. The pH is selected so as to ionize a compound which is an investigation object and also to dissolve the compound. A part of the solution weighing about 0.65 g is added to a 5 mm$\phi$ NMR tube and weighed to the order of 0.001 g. A NMR spectrometer (manufactured by Bruker Co., Ltd., model: Avance II) is used to measure the chemical shift of non-bound $^{43}Ca$ by using a proton resonant frequency at 400.13 MHz. A 0.2 to 1.0 M solution of the investigation object compound (ligand) is added in continuous increments. After each of the increments, the chemical shift of $^{43}Ca$ is measured to calculate $\delta$ which is a difference between the chemical shift of a sample and the chemical shift of non-bound calcium. The continuous increments are so designed that the ratio $L_0/Ca_0$ (here, Lo is the total concentration of anions which are complexed from a ligand, and protonated and are free and Cao is the total concentration of calcium in all existing chemical species.) is 0.25, 0.5, 1, 2, 3, 4, 6 and 8. The calcium binding index (NMR) is calculated as $\log_{10}(X)$ to determine X by fitting the parameter X and $\delta_m$ in the following equation such that a difference in RMS between the data and a chemical shift estimated from the equation is minimized.

[equation 1]

$$\delta = \frac{\delta_m}{2}\left[\,[1+(L_0/Ca_0)+(1+H^+/K_a)/(XCa_0)]-\sqrt{[1+(L_0/Ca_0)+(1+H^+/K_a)/(XCa_0)]^2-4\,(L_0/Ca_0)}\,\right]$$

Here, $\delta$ represents a difference between the chemical shift of $^{43}Ca$ of the sample and the chemical shift of free

aqueous $^{43}Ca^{2+}$; $\delta_m$ represents a calculated difference between the chemical shift of $^{43}Ca$ in infinite L/Ca and the chemical shift of free $^{43}Ca^{2+}$; $L_0$ represents the total concentration of anions which are complexed from a ligand, protonated and free; Cao represents the total concentration of calcium in all existing chemical species; X represents a parameter to be fitted; and $K_a$ represents the proton dissociation constant of a ligand LH.

The above NMR method is used to determine the calcium indices of various compounds relating to functional groups in the surface-treated resin. Specific examples are shown in Table 2 below.

[Table 2]

| Chemical Compound | Calcium index |
| --- | --- |
| Benzoic acid | 0,58 |
| 1,2,3-benzenetricarboxylic acid | 1,99 |
| 2-chloro-4-methyl-6-nitrosophenol | 2,22 |

The calcium index calculated by the NMR method is different from that calculated by the ultraviolet-visible spectroscopy and cannot be therefore compared directly with the calcium index calculated by the ultraviolet-visible spectroscopy.

In the present invention, the reference for the evaluation of calcium index is 1,2,3-benzenetricarboxylic acid. The functional group bound to the surface of the resin has a larger calcium index than the calcium index of 1,2,3-benzenetricarboxylic acid. The calcium index of the functional group is preferably above 2.8, more preferably above 3.0 and particularly preferably above 3.2 when it is measured by the ultraviolet-visible spectroscopy.

(3) Resin emulsion

The resin emulsion in the present invention means an aqueous dispersion solution in which the continuous phase is water and the dispersed particles are resin microparticles. The above resin emulsion generally has such a nature that it is thickened and coagulated when the amount of water which is the continuous phase is reduced by evaporation or penetration, and has the effect of restraining the penetration of the pigment into printing paper to promote the fixation of the pigment to the paper. The resin emulsion may be produced, for example, by blending water, a monomer, an emulsifier and a polymerization initiator to undergo an emulsion-polymerization reaction, followed by neutralizing. As the emulsifier, a usual polymer-type surfactant may be used, or a reactive emulsifier having an unsaturated bond may be used. The resin emulsion may also be obtained by blending resin microparticles with water together with a surfactant, without running an emulsion polymerization reaction. For example, the resin emulsion may be obtained by adding and mixing resin microparticles constituted of a (meth) acrylic ester or styrene and the (meth) acrylic ester together with a surfactant into water. In this case, the blending ratio (ratio by weight) of the resin component to the surfactant is usually preferably about 10:1 to 5:1. When the ratio of the surfactant to be used is less than the above range, an emulsion is scarcely formed, whereas when the ratio is out of the above range, there is a fear as to deteriorations in the water resistance and penetrability of ink, and therefore, not preferable.

Preferred examples of the resin component constituting the resin emulsion include (meth) acryl resin, styrene resin, polyester resin, vinyl resin, polyethylene resin, urethane resin, silicone resin, acrylamide resin, epoxy resin, resin containing an acid group such as (meth)acrylic acid and mixtures of these resins. Particularly, the resin microparticles preferably contain a (meth)acryl resin. No particular limitation is imposed on the form of copolymer, and the copolymer may be, for example, any of a block copolymer, random copolymer and the like.

As these resin components, polymers having both a hydrophilic part and a hydrophobic part are preferable, and the average particle diameter is preferably 500 nm or less and more preferably 100 nm or less though no particular limitation is imposed on the average particle diameter as long as an emulsion can be formed. If the particle diameter of the resin component constituting the resin emulsion is larger than 500 nm, so that the difference in particle diameter between the resin component and the pigment particles increases, when the inkjet ink is discharged to form dots, the resin particles formed from resin emulsion particles are brought into contact with each other, and pigment particles exist in spaces between resin particles, resulting in the formation of sea-island structures. Therefore, there is a fear that the fixability of the pigment is hindered.

(a) Emulsifier, polymerization initiator, chain transfer agent

The emulsifier and the polymerization initiator which are used for the above emulsion polymerization will be explained. As the emulsifier, for example, an anionic surfactant, nonionic surfactant or amphoteric surfactant may be used. Also, a reactive surfactant may be used.

As the polymerization initiator, potassium persulfate, ammonium persulfate, hydrogen persulfate, azobisisobutyronitrile, benzoyl peroxide, dibutyl peroxide, peracetic acid, cumenehydroperoxide, t-butylhydroxy-peroxide or paramenthanehydroxy-peroxide may be used.

As the chain transfer agent for polymerization, t-dodecylmercaptan, n-dodecylmercaptan, n-octylmercaptan, xanthogenes such as dimethylxanthogene disulfide and diisobutylxanthogene disulfide, dipentene, indene, 1,4-cyclohexadiene, dihydrofuran, xanthene or the like may be used.

(b) Monomer component

(b-1) Monomer

An unsaturated vinyl monomer is preferably used as the monomer to be used in the aforementioned emulsion polymerization. Specific examples of the unsaturated vinyl monomer include acrylic ester monomers, methacrylic ester monomers, aromatic vinyl monomers, vinyl ester monomers, vinylcyan compound monomers, halogenated monomers, olefin monomers and diene monomers which are usually used in emulsion polymerization.

Specific examples of the above monomer include acrylic esters such as methyl acrylate, ethyl acrylate, isopropyl acrylate, n-butyl acrylate and isobutyl acrylate; methacrylic esters such as methyl methacrylate, ethyl methacrylate, isopropyl methacrylate and n-butyl methacrylate; vinyl esters such as vinyl acetate; vinylcyan compounds such as acrylonitrile and methacrylonitrile; halogenated monomers such as vinylidene chloride and vinyl chloride; aromatic vinyl monomers such as styrene, 2-methylstyrene, vinyltoluene, t-butylstyrene and chlorostyrene; olefins such as ethylene, propylene and isopropylene; dienes such as butadiene and chloroprene; and vinyl monomers such as vinyl ether, vinyl ketone and vinyl pyrrolidone. It is essential to utilize an unsaturated vinyl monomer having a carboxyl group for monomers having no carboxyl group. Preferable examples of the above monomer include acrylic acid, methacrylic acid, itaconic acid, fumaric acid and maleic acid, and it is more preferable to use methacrylic acid.

(b-2) Crosslinking monomer

The resin microparticles forming the resin emulsion can be designed to have a structure crosslinked by a crosslinking monomer having two or more polymerizable double bonds. Examples of the crosslinking monomer having two or more polymerizable double bonds include diacrylate compounds such as polyethylene glycol diacrylate, triethylene glycol diacrylate and 1,3-butylene glycol diacrylate; triacrylate compounds such as trimethylolpropane triacrylate, trimethylolethane triacrylate and tetramethylolmethane triacrylate; dimethacrylate compounds such as ethylene glycol dimethacrylate, diethylene glycol dimethacrylate and triethylene glycol dimethacrylate; trimethacrylate compounds such as trimethylolpropane trimethacrylate and trimethylolethane trimethacrylate; and divinylbenzene.

Stability can be further improved by adding an acrylamide or a hydroxyl group-containing monomer in addition to the above monomer. Specific examples of the acrylamide include acrylamide and N,N-dimethylacrylamide. Specific examples of the hydroxyl group-containing monomer include 2-hydroxyethyl acrylate, 2-hydroxypropyl acrylate and 2-hydroxyethyl methacrylate. These compounds may be used either singly or in combinations of two or more.

(c) Neutralizer

As a neutralizer which is used after the end of the emulsion polymerization reaction, an acid or base may be used according to the type of a salt-generating group. Examples of the acid include inorganic acids such as hydrochloric acid and sulfuric acid, and organic acids such as acetic acid, propionic acid, lactic acid, succinic acid, glycolic acid, gluconic acid, and glyceric acid. Examples of the base include tertiary amines such as trimethylamine and triethylamine, ammonia, sodium hydroxide and potassium hydroxide. There is no particular limitation to the degree of neutralization. Although the resin emulsion preferably has a pH of 7 to 10, it is necessary that the concentration of ionic components be so properly regulated that the conductance of the resin emulsion does not become high.

(d) Molecular weight of resin emulsion

The molecular weight of the resin emulsion is preferably 1,000 or more and more preferably about 1,000 to 200,000. The solid content of the resin emulsion may be, for example, about 0.05 to 20 mass% based on the total amount of the inkjet ink though no particular limitation is imposed on the resin emulsion content of the inkjet ink.

(e) Conductance of resin emulsion

When a surface-treated pigment which will be described hereinafter is used as the pigment in the inkjet ink of the present invention, it is considered that reactivity between the resin emulsion and the surface-treated pigment can be reduced due to the low conductance of an aqueous solution containing 1 mass% of a solid content of the resin emulsion. Here, the description "an aqueous solution containing 1 mass% of a solid content of the resin emulsion" means a solution obtained by dissolving or dispersing the resin emulsion in water such that the solid concentration is 1 mass%.
The conductance of the aqueous solution containing 1 mass% of a solid content of the resin emulsion can be adjusted by the type of the resin component, the type of the monomer, the reaction mechanism, the type of the emulsifier, the existence or absence of addition of the emulsifier and the type of the neutralizer. The low conductance of the aqueous solution containing 1 mass% of a solid content of the resin emulsion is considered to show that ionic groups and counter ions of these ionic groups which the resin emulsion itself contains exist in slight amounts in the ink. Also, the low conductance of the aqueous solution containing 1 mass% of a solid content of the resin emulsion is considered to show that impurities such as ionic materials originated from the production of the resin emulsion are contained in small amounts in the ink.
It is predicted that the functional group having a large calcium index in the surface-treated pigment tends to interact with ionic groups, counter ions of these ionic groups and ionic impurities contained in the resin emulsion. Because this functional group contributes to the dispersion stability of the surface-treated pigment, the dispersion function is deteriorated by the above interaction if the ionic groups, counter ions and ionic impurities are contained in large amounts in the ink. Therefore, if the conductance of the aqueous solution containing 1 mass% of a solid content of the resin emulsion is high, the dispersion condition of the surface-treated pigment is considered to be impaired when the resin emulsion is blended with the pigment dispersion containing the surface-treated pigment to prepare ink.
On the other hand, it is predicted that, by selecting a resin emulsion having a low conductance of the aqueous solution containing 1 mass% of a solid content of the resin emulsion, the amounts of ionic groups, counter ions of these ionic groups and ionic impurities existent in the resin emulsion can be made small and the interaction between the functional group having a large calcium index in the surface-treated pigment and the ionic groups, counter ions and ionic impurities in the resin emulsion and also the coagulation of the surface-treated pigment caused by the interaction can be reduced. Therefore, in the present invention, the storage stability of the inkjet ink can be made high.
When the resin emulsion contains a phosphoric acid group, reactivity between the ink and calcium can be made high. However, since the conductance of the resin emulsion becomes high, the conductance must be adjusted to not more than 300 $\mu$S/cm.
The conductance of the aqueous solution containing 1 mass % of a solid content of the resin emulsion is preferably 300 $\mu$S/cm or less, more preferably 200 $\mu$S/cm or less and even more preferably 150 $\mu$S/cm or less. If the above conductance is high, there is a fear that ionic groups, counter ion of these ionic groups and ionic impurities in the resin emulsion affect the dispersion stability of the surface-treated pigment. Because the influence on the dispersibility of the surface-treated pigment is suppressed by reducing the total content of ions in the resin emulsion, the conductance of the aqueous solution containing 1 mass% of a solid content of the resin emulsion is lower, the better. The lower limit of the conductance is about 20 $\mu$S/cm. A resin emulsion having an excessively low conductance is deteriorated in dispersibility and has difficulty in the production of a resin emulsion having stable quality.
As a method for measuring the conductivity, a method is adopted in which, first, the resin emulsion is diluted with ion exchange water to a solid content of 1 mass%, and then, the conductance of the aqueous solution containing 1 mass% of a solid content of the resin emulsion is measured by using a conductance meter (manufactured by Eutech Instruments, model: EC Testr 11+).

(4) Surfactant

The inkjet ink of the present invention generally contains a surfactant. Though no particular limitation is imposed on the surfactant, a silicone type surfactant, a fluorine type surfactant and an acetylene glycol type surfactant are preferably used. Specific examples of the surfactant include Surfynols 104, 82, 465 and 485, or TG (all of these products are acetylene glycol type surfactants; manufactured by Air Products Japan, Inc.), Surflon (fluorine-type surfactant; manufactured by AGC Seimi Chemical Co., Ltd.), and BYK302, 307, 331 and 348 (all of these products are silicone type surfactants; manufactured by BYK Additives & Instruments). The content of the surfactant is properly adjusted according to the content of the water-soluble organic solvent and the content of other surfactants. The content of the surfactant is preferably in a range of about 0.01 to 3 mass% and more preferably in a range of 0.1 to 1.5 mass%, based on the total amount of the inkjet ink.

(5) Additives

The inkjet ink of the present invention may contain other optional components besides the above components. For example, a penetrant, wetting gent, antiseptic, antioxidant, conductance regulator, pH regulator, viscosity regulator, surface tension regulator, antifoaming agent and oxygen absorber may be added to the inkjet ink of the present invention.

(a) Penetrant

According to a preferred embodiment of the present invention, the ink composition preferably contains a penetrant. Though some types of below-mentioned water-soluble organic solvents are able to function as a penetrant, preferable examples of the penetrant in the present invention include 1,2-alkyldiol, glycol ether, acetylene glycol type surfactants, and acetylene alcohol type surfactants, and these may be used either singly or in combinations of two or more. Specific examples of the 1,2-alkyldiol include 1,2-hexanediol and 1,2-pentanediol. Specific examples of the glycol ether include diethylene glycol monobutyl ether, diethylene glycol monopentyl ether, diethylene glycol monohexyl ether and 3-methoxy-3-methyl-1-butanol. The amount of 1,2-alkylene glycol or glycol ether to be added is preferably 1 to 15 wt% and more preferably 1 to 10 wt% based on the total weight of the ink composition.

(b) Wetting agent

According to a preferred embodiment of the present invention, the ink preferably further contains a wetting agent. As the wetting agent, one comprising a water-soluble organic solvent having a boiling point of 180 °C or more, water absorbing ability and water retentivity is preferably used. A preferable wetting agent is glycerin or triethylene glycol. The amount of the wetting agent to be added is preferably in a range of 5 to 30 wt% and more preferably 5 to 20 wt% based on the total weight of the inkjet recording ink composition. In the present invention, a tertiary amine may be utilized as the wetting agent. Examples of the tertiary amine include trimethylamine, triethylamine and triethanolamine. These may be used either singly or in combinations of two or more. The amount of the tertiary amine to be added is preferably in a range of about 0.3 to 15 wt% and more preferably about 0.5 to 10 wt% based on the total amount of the ink composition.

(6) Solvent

In the inkjet ink of the present invention, a water-soluble organic solvent, water or a mixture of these solvents is used as the aqueous solvent. Examples of the water-soluble organic solvent include alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol and n-pentanol; monohydric alcohols such as 3-methoxy-3-methyl-1-butanol, 3-methoxy-1-propanol, 1-methoxy-2-propanol and 3-methoxy-n-butanol; amides such as dimethylformamide and dimethylacetamide; ketones and ketoalcohols such as acetone and diacetone alcohol; ethers such as tetrahydrofuran and dioxane; oxyethylene and oxypropylene copolymers such as polyethylene glycol and polypropylene glycol; diols such as ethylene glycol, propylene glycol, diethylene glycol, dipropylene glycol, 1,3-propylene glycol, isopropylene glycol, isobutylene glycol, trimethylene glycol, triethylene glycol, tripropylene glycol, tetraethylene glycol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol and 3-methyl-1,5-pentanediol; triols such as glycerin, trimethylolethane, trimethylolpropane and 1,2,6-hexanetriol; tetrahydric alcohols such as mesoerythritol and pentaerythritol; monoalkyl ethers such as ethylene glycol monomethyl (or ethyl, isopropyl, n-butyl, isobutyl, n-hexyl or 2-ethylhexyl)ether, diethylene glycol monomethyl (or ethyl, isopropyl, n-butyl, isobutyl, n-hexyl or 2-ethylhexyl)ether, triethylene glycol monomethyl (or ethyl, isopropyl, n-butyl or isobutyl)ether, propylene glycol monomethyl (or ethyl, isopropyl, n-butyl or isobutyl)ether and dipropylene glycol monomethyl (or ethyl, isopropyl, n-butyl or isobutyl)ether; dialkyl ethers of a polyhydric alcohol such as diethylene glycol dimethyl ether, diethylene glycol diethyl ether, diethylene glycol ethyl methyl ether, triethylene glycol dimethyl ether, triethylene glycol diethyl ether, tetraethylene glycol dimethyl ether, tetraethylene glycol diethyl ether, propylene glycol dimethyl ether, propylene glycol diethyl ether, dipropylene glycol dimethyl ether and dipropylene glycol diethyl ether; alkanolamines such as monoethanolamine, diethanolamine, triethanolamine, N-methylethanolamine, N-ethylethanolamine, N-butylethanolamine, N-methyldiethanolamine, N-ethyldiethanolamine and N-butyldiethanolamine; nitrogen-containing heterocyclic compounds such as N-methyl-2-pyrrolidone, 2-pyrrolidone and 1,3-dimethyl-2-imidazolidinone; and cyclic compounds such as γ-butyrolactone and sulfolane. These water-soluble organic solvents may be used either singly or in combinations thereof.

Also, not usual water containing various ions but deionized water is preferably used as the above water.

When the inkjet ink contains water, the content of water may be designed to be in a range of about 20 to 80 mass% and preferably in a range of 30 to 50 mass% based on the total amount of the inkjet ink, though no particular limitation is imposed on it.

(7) Composition of inkjet ink

No particular limitation is imposed on the content of the pigment dispersion in the inkjet ink as long as a sufficient image density can be attained. Specifically, the content of the pigment of the pigment dispersion is preferably in a range of 0.05 to 20 mass% based on the total amount of the inkjet ink. At this time, the sum of the solid contents of the pigment of the pigment dispersion and the resin emulsion is preferably in a range of 0.1 to 30 mass% based on the total amount of the inkjet ink.

(8) Inkjet ink printing method

Although the inkjet ink of the present invention may be used in any of piezo system, thermal system and electrostatic system inkjet recording devices, it is particularly preferably used in a piezo system inkjet recording device. A piezo system recording head uses a piezoelectric vibrator as a pressure generator and increases/decreases the pressure in a pressure room by the deformation of the piezoelectric vibrator to thereby discharge ink droplets. In such a recording head, attempts have been made to further improve a high-quality image and recording speed. An attempt to increase the number of recordable colors by increasing the number of nozzle rows has been made to further improve a high-quality image. Also, an attempt to increase the number of nozzle openings constituting one nozzle row has been made to improve recording speed.

However, if the head nozzle is microsized, flight bending and nozzle clogging are easily caused by stuck and left ink. Also, when coagulates are generated in ink components in long-term use, this is a hindrance to the flight of ink droplets, causing troubles such as flight bending and nozzle clogging. For this, it is of urgent necessity to develop an inkjet ink which does not cause clogging of an ink jet head and can be stably discharged. Accordingly, as compared with a system, such as a thermal jet which easily generates coagulates by heating, the piezo system inkjet is more resistant to the generation of coagulates due to its driving scheme, and also, the inkjet ink of the present invention can further inhibit the generation of coagulates. Therefore, the inkjet ink of the present invention is suitable for use in a piezo system inkjet recording device.

[Examples]

The present invention will be explained in detail by way of examples and comparative examples.

First, the recording medium, the preparation of the ink-receiving solution, the preparation of the inkjet ink and the evaluation methods which were used in examples and comparative examples will be explained.

(1) Recording medium

The following high-quality paper, coat paper and cloth as absorbing materials and the following polypropylene as a non-absorbing substrate which is a non-absorbing material to be printed by using the inkjet ink were used.

(a) High-quality paper

The high-quality paper (trade name: OK Prince) of Oji Paper Co., Ltd. was used as the high-quality paper which is uncoated paper.

(b) Coat paper

The coat paper (trade name: OK Topcoat +) of Oji Paper Co., Ltd. was used as the coat paper which is coated paper.

(c) Cloth

Kanakin No. 3 attached white cloth for tests (based on JIS L0803)

(d) Polypropylene

Polypropylene (trade name: PET50 (K2411)) of Lintec Corporation

(e) Aluminum deposited polyester

Aluminum deposited polyester (trade name: FNS Tsuya) of Lintec Corporation

(f) White polyester

White polyester (trade name: PETWH50 (A)) of Lintec Corporation (g) Transparent polyester
Transparent polyester (trade name: A4300) of Toyobo Co., Ltd.

(2) Preparation of ink-receiving solution

Each metal salt was dissolved in ethanol. Only when NaCl and calcium (+)-pantothenate were used as the metal salt, they were dissolved in a mixed solution of ethanol and water (equimass mixture) to prepare ink-receiving solutions shown in Tables 4 and 5.

(3) Preparation of inkjet ink

(3-1) Preparation of pigment dispersion

The methods of preparing pigment dispersions 1, 4, 5 and 6 (having a phosphorus-containing group), pigment dispersions 2, 7, 8 and 9 (having a carboxyl group) and a pigment dispersion 3 (having no phosphorus-containing group) used in Examples and Comparative Examples will be described hereinunder.

(a) Method of preparing pigment dispersion 1 (having a phosphorus-containing group)

The same procedures as those described in Kieczykowski et al., J. Org. Chem., 1995, Vol. 60, P. 8310 to 8312 and the description of U.S. Patent No. 4,922,007 were used to produce a [2-(4-aminophenyl)-1-hydroxyethane-1,1-diyl] bisphosphonic acid-sodium salt. First, a 500 mL three-necked flask was equipped with a condenser provided with a gas outlet at the top thereof, a thermometer, a dry nitrogen introduction port and a 100 mL equalizing dropping funnel. 32 g of phosphorous acid (380 mmol) and 160 mL of methanesulfonic acid (solvent) were first added to this flask. 57.4 g of aminophenylacetic acid (380 mmol) was added little by little to the stirred mixture. The stirred mixture was heated at 65 °C for 1 to 2 hours to dissolve the solid completely. The whole system was flushed with dry nitrogen and the temperature of the system was reduced to 40 °C after the solid was completely dissolved. 70 mL of $PCl_3$ (800 mmol) was gradually added to the heated solution through the dropping funnel. HCl gas was generated from the reaction. This gas flowed through the gas outlet to a dry tube and then through a funnel to a concentrated NaOH solution in a beaker. After the addition was completed, the reaction mixture was stirred for 2 hours and concurrently heated at 40 °C. After that, the temperature of the system was raised to 65 to 70 °C, and the mixture was stirred overnight. The produced supernatant brown solution was cooled to ambient temperature and quenched by addition to 600 g of an ice/water mixture.
This aqueous mixture was poured into a 1 L beaker and heated at 90 to 95°C for 4 hours (the top of the beaker was covered with a glass plate). Then, this mixture was cooled to ambient temperature and pH of this mixture was adjusted to 4 to 5 by a 50% NaOH solution (the NaOH solution was slowly added because the temperature would rise as a result of the quenching). This mixture was cooled to 5 °C in an ice bath for 2 hours, and then, the resulting solid was collected by suction filtration. The collected solid was washed with 1 L of cooled deionized water and dried at 60 °C overnight to obtain a white or off-white solid product (yield: 48 g, 39%). $^1$H-NMR data ($D_2O$/NaOH) of this compound was as follows: 7.3 (2H, d), 6.76 (2H, d), and 3.2 (2H, t). $^{13}$C-NMR data ($D_2O$/NaOH) of this compound was as follows: 141, 130, 128, 112 and 73.
With regard to the above compound, a pigment was modified by the following general procedures. Black Pearls (registered trademark) 700 Carbon Black (manufactured by Cabot Corporation) was used as carbon black. 20 g of a pigment, 20 mmol of the material produced above, 20 mmol of nitric acid and 200 mL of deionized water were blended by a Silverson mixer (6000 rpm) at ambient temperature. After 30 minutes, sodium nitrite (20 mmol) dissolved in a small amount of water was slowly added to this mixture. The temperature reached 60 °C by mixing to allow the reaction to proceed one hour. A surface-treated pigment was produced by the above process. Then, pH of the pigment was adjusted to 8 to 9 by a NaOH solution. After 30 minutes, the dispersion solution in which the surface-treated pigment (including pigments obtained by binding at least two phosphonic acid groups or salt thereof) was produced was subjected to diafiltration with a spectrum membrane by using 20 parts by volume of deionized water to concentrate the solution to a solid content of 15 mass%.

(b) Pigment dispersion 2 (having a carboxyl group)

A pigment dispersion 2 was obtained in the same manner as the above pigment dispersion 1 except that a p-aminobenzoic acid-sodium salt was used in place of the

[2-(4-aminophenyl)-l-hydroxyethane-1,1-diyl]bisphosphonic acid-sodium salt.

(c) Pigment dispersion 3 (having no phosphorus-containing group)

A black pigment dispersion (manufactured by Tokai Carbon Co., Ltd., trade name: AquaBlack001) was used.

(d) Pigment dispersion 4

A pigment dispersion 4 was prepared in the same manner as the pigment dispersion 1 except that PR122 which is a magenta pigment was used in place of the carbon black of the pigment dispersion 1.

(e) Pigment dispersion 5

A pigment dispersion 5 was prepared in the same manner as the pigment dispersion 1 except that PB15:4 which is a cyan pigment was used in place of the carbon black of the pigment dispersion 1.

(f) Pigment dispersion 6

A pigment dispersion 6 was prepared in the same manner as the pigment dispersion 1 except that PY74 which is a yellow pigment was used in place of the carbon black of the pigment dispersion 1.

(g) Pigment dispersion 7

A pigment dispersion 7 was prepared in the same manner as the pigment dispersion 2 except that PR122 which is a magenta pigment was used in place of the carbon black of the pigment dispersion 2.

(h) Pigment dispersion 8

A pigment dispersion 8 was prepared in the same manner as the pigment dispersion 2 except that PB15:4 which is a cyan pigment was used in place of the carbon black of the pigment dispersion 2.

(i) Pigment dispersion 9

A pigment dispersion 9 was prepared in the same manner as the pigment dispersion 2 except that PY74 which is a yellow pigment was used in place of the carbon black of the pigment dispersion 2.
The above pigment dispersions 1 to 9 are shown in Table 3.

[Table 3]

| | Pigment | Solid content | Functional group | pH | |
|---|---|---|---|---|---|
| | - | (mass %) | - | - | |
| Pigment dispersion 1 | carbon black | 15 | phosphonic acid group | 9,0 | *prototype |
| Pigment dispersion 2 | carbon black | 15 | carboxylic acid group | 8,0 | *prototype |
| Pigment dispersion 3 | carbon black | 15 | carboxylic acid group | 8,0 | *commercialized product |
| Pigment dispersion 4 | magenta | 15 | phosphonic acid group | 9,0 | *prototype |
| Pigment dispersion 5 | cyan | 15 | phosphonic acid group | 9,0 | *prototype |
| Pigment dispersion 6 | yellow | 15 | phosphonic acid group | 9,0 | *prototype |
| Pigment dispersion 7 | magenta | 15 | carboxylic acid group | 8,0 | *prototype |
| Pigment dispersion 8 | cyan | 15 | carboxylic acid group | 8,0 | *prototype |

(continued)

|  | Pigment | Solid content | Functional group | pH |  |
|---|---|---|---|---|---|
|  | - | (mass %) | - | - |  |
| Pigment dispersion 9 | yellow | 15 | carboxylic acid group | 8,0 | *prototype |

(3-2) Resin emulsion

A resin emulsion was prepared by the following method. The average particle diameter of the obtained resin emulsion was measured using a thick-type particle size analyzer (manufactured by Otsuka Electronics Co., Ltd., model: FPAR-1000).

After the atmosphere in a flask equipped with a mechanical stirrer, a thermometer, a nitrogen introduction tube, a reflux tube and a dropping funnel was sufficiently replaced with nitrogen gas, the flask was charged with 0.75 g of a reactive surfactant (manufactured by Kao Corporation, trade name: LATEMUL PD-104), 0.04 g of potassium persulfate, 3 g of acrylic acid and 150 g of pure water, and these were stirred at 25 °C to mix. A mixture of 22.5 g of styrene, 60 g of methyl methacrylate, 30 g of ethyl methacrylate and 34.5 g of 2-ethylhexyl acrylate was added dropwise to the above mixture to prepare a pre-emulsion. Also, after the atmosphere in a flask equipped with a mechanical stirrer, a thermometer, a nitrogen introduction tube, a reflux tube and a dropping funnel was sufficiently replaced with nitrogen gas, the flask was charged with 3 g of the above reactive surfactant (manufactured by Kao Corporation, trade name: LATEMUL PD-104), 0.01 g of potassium persulfate and 200 g of pure water, and these were stirred at 70 °C to mix. After that, the above prepared pre-emulsion was added dropwise into the flask over 3 hours. The resulting mixture was further aged at 70 °C under heating for 3 hours, then cooled and adjusted to pH of 8 by adding an aqueous ammonia solution. Then, the resulting mixture was filtered by a #150 mesh filter (manufactured by Nippon Orimono Co., Ltd.) to obtain 500 g of a resin emulsion (solid content: 30 mass%). The average particle diameter of the obtained resin emulsion was 90 nm. The conductance of an aqueous solution containing 1 mass% of a solid content of the resin emulsion was 69.2 $\mu$S/cm.

(3-3) Surfactant

A surfactant (manufactured by Air Products Japan, Inc., trade name: Surfynol 465) was used to adjust the surface tension.

(3-4) Composition of inkjet ink

The composition of the inkjet ink is as follows.
Pigment dispersion: 33.3 (mass%) (5 mass% of pigment component)
Resin emulsion: 16.7 (mass%) (5 mass% of resin in resin emulsion)
Glycerin: 20 (mass%)
Diethylene glycol: 20 (mass%)
Surfactant:0.5 (mass%)
Water: balance

Some of the compositions of the inkjet inks are shown in Tables 4 and 5.

(4) Evaluation methods

(a) Feathering (Examples 1 to 10, Comparative Examples 1 to 5, Reference Example 1)

After an inkjet ink was printed on a recording medium by means of an inkjet recording device (manufactured by FUJI FILM Dimatix, Inc., model: DMP-2831) and then left at ambient temperature for 5 minutes, the condition of the print product was evaluated based on the following criteria.
[criteria]
A: feathering is not seen
B: feathering is slightly seen
C: feathering is marked

(b) Color bleeding (Examples 11 to 21, Comparative Examples 6 to 13)

After an inkjet ink was printed on a recording medium by means of an inkjet recording device (manufactured by Seiko Epson Corporation, model: PX-101) and then left at ambient temperature for 5 minutes, the condition of the print product was evaluated based on the following criteria.
[criteria]
AA: bleeding is not observed
A: bleeding is slightly observed
B: bleeding is somewhat observed
C: bleeding is markedly observed

(c) Water resistance of image on high-quality paper and cloth (Examples 1 to 10, Comparative Examples 1 to 5)

After an inkjet ink was printed on a recording medium by means of an inkjet recording device (manufactured by FUJI FILM Dimatix, Inc., model: DMP-2831) and then left at ambient temperature for one day, eight 1 $cm^2$ (1 cm x 1 cm) waste paper sheets immersed in water were placed one upon another and reciprocated over the recording medium one time under a load of 200 g to evaluate the condition of the print product based on the following criteria.
[criteria]
A: ink is scarcely removed
B: ink is slightly removed
C: ink is markedly removed
(d) Water resistance of image on coat paper (Examples 11 to 17, Comparative Example 6 to 9)
After an inkjet ink was printed on coat paper (manufactured by Oji Paper Co., Ltd., trade name: OK Topcoat +) as a recording medium by means of an inkjet recording device (manufactured by Seiko Epson Corporation, model: PX-101) and left at ambient temperature for one day, eight 1 $cm^2$ (1 cm x 1 cm) waste paper sheets immersed in water were placed one upon another and reciprocated over the coat paper one time under a load of 200 g to evaluate the condition of the print product based on the following criteria.
[criteria]
A: ink is scarcely removed
B: ink is slightly removed
C: ink is markedly removed

(e) Color unevenness (Examples 18 to 21, Comparative Examples 10 to 13)

After an inkjet ink was printed on a recording medium by means of an inkjet recording device (manufactured by Seiko Epson Co., Ltd., model: PX-101) and left at ambient temperature for 5 minutes, the condition of the print product was evaluated based on the following criteria.
[criteria]
A: ink spread and color unevenness are not observed
B: ink spread and color unevenness are somewhat observed
C: ink spread and color unevenness are markedly observed

[Example 1]

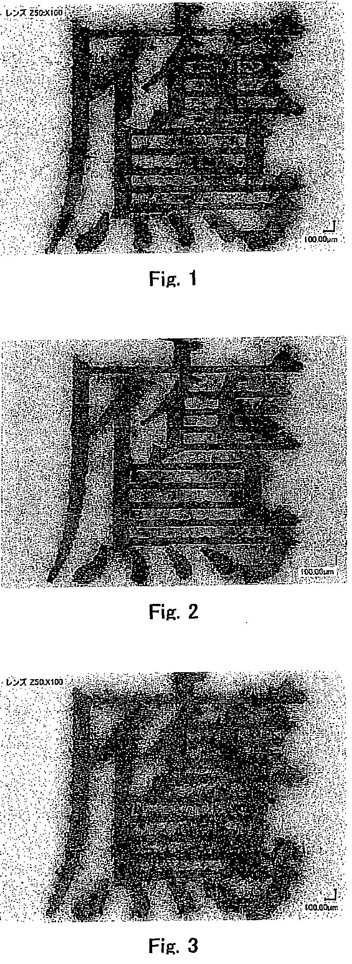

An ink-receiving solution comprising $CaCl_2$ as a metal salt shown in Table 4 was applied uniformly to the entire surface of high-quality paper by means of a meyer bar (#10) which is a kind of coating means and dried.
The amount of the ink-receiving solution applied to the recording medium was 200 $\mu$mol/$cm^2$ as a metal salt.
An inkjet ink containing the pigment dispersion 1 was used to print a Chinese character meaning "falcon" at 7-point on the surface of the high-quality paper to which $CaCl_2$ was adhered at a discharge rate of 10 m/sec, a drive frequency of 5 kHz and normal temperature (25 °C) by setting the dot pitch (dot interval) to 20 $\mu$m and using a piezo drive system inkjet recording device (FUJIFILM Dimatix Co., Ltd., model: DMP-2831). The print product is shown in Fig. 1. The feathering and water resistance of the obtained print product were evaluated.

[Example 2]

A Chinese character "falcon" was printed in the same manner as in Example 1 except that an ink-receiving solution containing $MgCl_2$ shown in Table 4 in place of $CaCl_2$ was used to evaluate the feathering and water resistance of the obtained print product. The print product is shown in Fig. 2.

[Example 3]

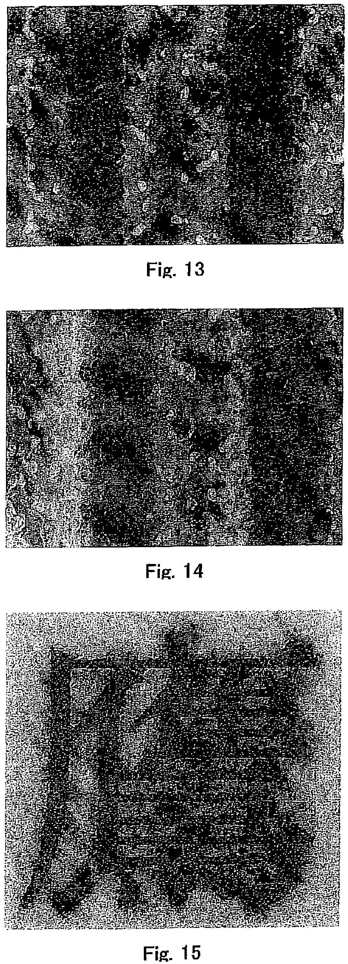

After an ink-receiving solution was applied uniformly to the entire surface of high-quality paper and dried in the same manner as in Example 1 as shown in Table 4 except that the amount of the ink-receiving solution applied to the surface of the high-quality paper was set to 0.01 $\mu$mol/cm$^2$ as a metal salt, a Chinese character "falcon" was printed on the surface of the high-quality paper to which CaCl$_2$ was adhered in the same manner as in Example 1. The print product is shown in Fig. 15. The feathering and water resistance of the obtained print product were evaluated.

[Examples 4 to 6]

After an ink-receiving solution was applied uniformly to the entire surface of a recording medium and dried in the same manner as in Example 1 except that ink-receiving solutions containing an inorganic salt shown in Table 4 and the pigment dispersions 1, 4, 5 and 6 were used in Examples 4 to 6, a Chinese character "falcon" was printed in the same manner as in Example 1. The feathering and water resistance of each of the obtained print products were evaluated.

[Examples 7 and 8]

After an ink-receiving solution was applied uniformly to the entire surface of a recording medium and dried in the same manner as in Example 1 except that ink-receiving solutions containing an organic acid salt shown in Table 4 and the pigment dispersions 1, 4, 5 and 6 were used in Examples 7 and 8, a Chinese character "falcon" was printed in the same manner as in Example 1. The feathering and water resistance of each of the obtained print products were evaluated.

[Comparative Example 1]

A Chinese character "falcon" was printed in the same manner as in Example 1 except that no ink-receiving solution was applied to high-quality paper, and the feathering and water-resistance of the obtained print product were evaluated. The print product is shown in Fig. 3.

[Comparative Example 2]

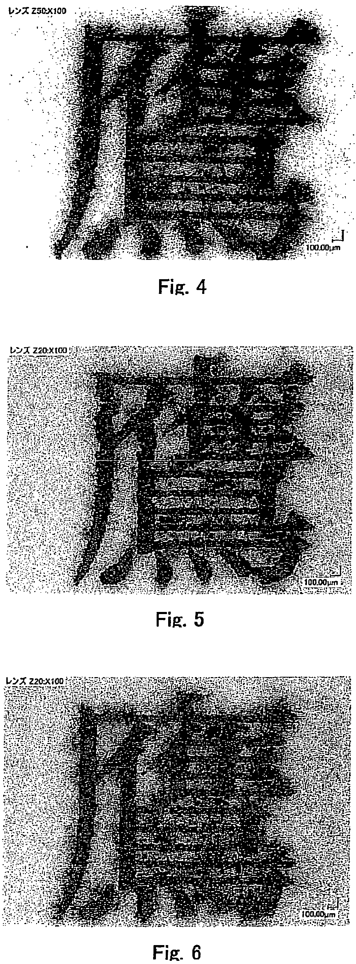

A Chinese character "falcon" was printed in the same manner as in Example 1 except that the pigment dispersion 2 was used in place of the pigment dispersion 1, and the feathering and water-resistance of the obtained print product were evaluated. The print product is shown in Fig. 4.

[Comparative Example 3]

A Chinese character "falcon" was printed in the same manner as in Example 2 except that the pigment dispersion 2 was used in place of the pigment dispersion 1, and the feathering and water-resistance of the obtained print product were evaluated. The print product is shown in Fig. 5.

[Comparative Example 4]

A Chinese character "falcon" was printed in the same manner as in Example 1 except that the pigment dispersion 3 was used in place of the pigment dispersion 1, and the feathering and water-resistance of the obtained print product were evaluated. The print product is shown in Fig. 6.

[Reference Example 1]

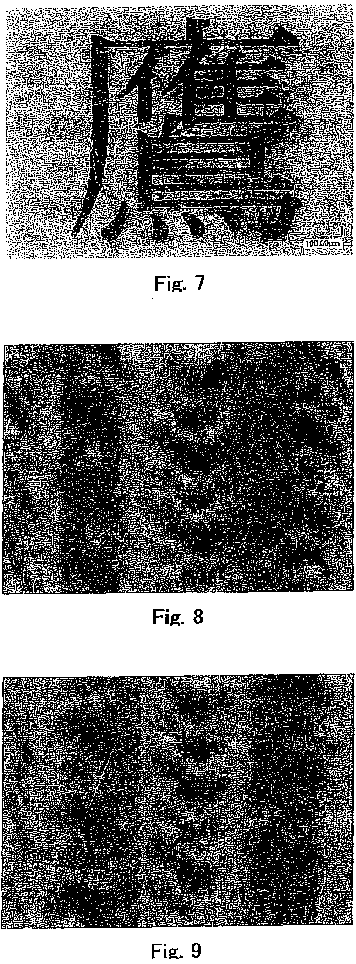

To compare the Chinese character "falcon" printed in Examples 1 and 2 with that of an offset print product, a Chinese character "falcon" was offset printed on high-quality paper. The print product is shown in Fig. 7 as Reference Example 1.

[Examples 9 and 10]

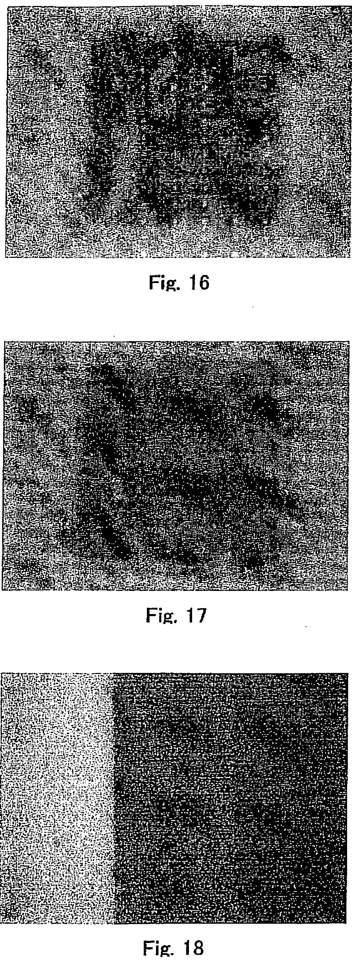

After an ink-receiving solution was applied uniformly to the entire surface of a recording medium and dried in the same manner as in Example 1 except that cloth was used as the recording medium and an ink-receiving solution containing an inorganic salt and an ink-receiving solution containing an organic acid salt shown in Table 4 and the pigment dispersions 1, 4, 5 and 6 were used, a Chinese character "falcon" was printed in the same manner as in Example 1. The feathering and water resistance of each of the obtained print products were evaluated. The print product obtained in Example 10 is shown in Fig. 16.

[Comparative Example 5]

Printing was carried out in the same manner as in Examples 9 and 10 except that an ink-receiving solution was not applied to cloth, and the feathering and water resistance of the obtained print product were evaluated. The obtained print product is shown in Fig. 17.

[Table 4]

| | Ink-receiving solution | | Recording medium | Inkjet ink | | Evaluation results | | |
|---|---|---|---|---|---|---|---|---|
| | Metal salt | Concentration (mol/L) | | Pigment dispersion | Functional group | Feathering | Water resistance | Fig. No. |
| Example 1 | CaCl$_2$ | 0,01 | high-quality paper | 1 | phosphonic acid group | A | A | Fig. 1 |
| Example 2 | MgCl$_2$ | 0,01 | high-quality paper | 1 | phosphonic acid group | A | A | Fix. 2 |
| Example 3 | CaCl$_2$ | 0,01 | high-quality paper | 1 | phosphonic acid group | A | A | Fig. 15 |
| Example 4 | Calcium nitrate | 0,1 | high-quality paper | 1,4,5,6 | phosphonic acid group | A | A | - |
| Example 5 | Calcium acetate | 0,1 | high-quality paper | 1,4,5,6 | phosphonic acid group | A | A | - |
| Example 6 | Calcium lactate | 0,1 | high-quality paper | 1,4,5,6 | phosphonic acid group | A | A | - |
| Example 7 | Calcium propionate | 0,1 | high-quality paper | 1,4,5,6 | phosphonic acid group | A | A | - |
| Example 8 | Calcium pantothenate | 0,1 | high-quality paper | 1,4,5,6 | phosphonic acid group | A | A | - |
| Comparative Example 1 | - | - | high-quality paper | 1 | phosphonic acid group | C | A | Fig. 3 |
| Comparative Example 2 | CaCl$_2$ | 0,01 | high-quality paper | 2 | carboxylic acid group | B | A | Fig. 4 |
| Comparative Example 3 | MgCl$_2$ | 0,01 | high-quality paper | 2 | carboxylic acid group | B | A | Fig. 5 |
| Comparative Example 4 | CaCl$_2$ | 0,01 | high-quality paper | 3 | (commercialized product) | B | A | Fig. 6 |
| Reference Example 1 | - | - | high-quality paper | - | - | A | - | Fig. 7 |
| Example 9 | CaCl$_2$ | 0,1 | cloth | 1,4,5,6 | phosphonic acid group | A | A | - |

(continued)

| | Ink-receiving solution | | Recording medium | Inkjet ink | | Evaluation results | | |
|---|---|---|---|---|---|---|---|---|
| | Metal salt | Concentration (mol/L) | | Pigment dispersion | Functional group | Feathering | Water resistance | Fig. No. |
| Example 10 | Calcium pantothenate | 0,1 | cloth | 1,4,5,6 | phosphonic acid group | A | A | Fig. 16 |
| Comparative Example 5 | - | - | cloth | 1,4,5,6 | phosphonic acid group | C | C | Fig. 17 |

* Pigment dispersions 1, 4, 5 and 6: self-dispersion type pigment having a phosphonic acid group as a phosphorus-containing group.
* pigment dispersion 3: self-dispersion type pigment having a carboxyl group bound thereto
* Reference Example 1 is an offset print product.

[Example 11]

An ink-receiving solution comprising CaCl$_2$ shown in Table 5 was applied uniformly to the entire surface of coat paper by means of a meyer bar (#10) and dried.

A piezo drive system inkjet recording device (manufactured by Seiko Epson Corporation, model: PX-101) and an inkjet ink containing the pigment dispersions 1, 4, 5 and 6 shown in Table 3 were used to print an image having different colors adjacent to one another on the surface of the coat paper to which CaCl$_2$ was adhered. The print image is shown in Fig. 8. The color bleeding and water resistance of the obtained print image were evaluated.

[Examples 12 to 14]

An image having different colors adjacent to one another was printed on the surface of coat paper in the same manner as in Example 11 except that ink-receiving solutions containing MgCl$_2$, MgSO$_4$ and ZnCl$_2$ as inorganic salts shown in Table 5 in place of CaCl$_2$ as a metal salt were used in Examples 12, 13 and 14, respectively. The print images are shown in Figs. 9, 10 and 11. The color bleeding and water resistance of each of the obtained print images were evaluated.

[Examples 15 and 16]

An image having different colors adjacent to one another was printed on the surface of coat paper in the same manner as in Example 11 except that ink-receiving solutions containing calcium propionate and calcium pantothenate as organic acid salts shown in Table 5 in place of CaCl$_2$ as a metal salt were used in Examples 15 and 16, respectively. The color bleeding and water resistance of each of the obtained print images were evaluated.

[Example 17]

An image having different colors adjacent to one another was printed on the surface of coat paper in the same manner as in Example 11 except that the CaCl$_2$ concentration of the ink-receiving solution was changed to 0.05 mol/l in Example 17. The color bleeding and water resistance of the obtained print image were evaluated.

[Comparative Example 6]

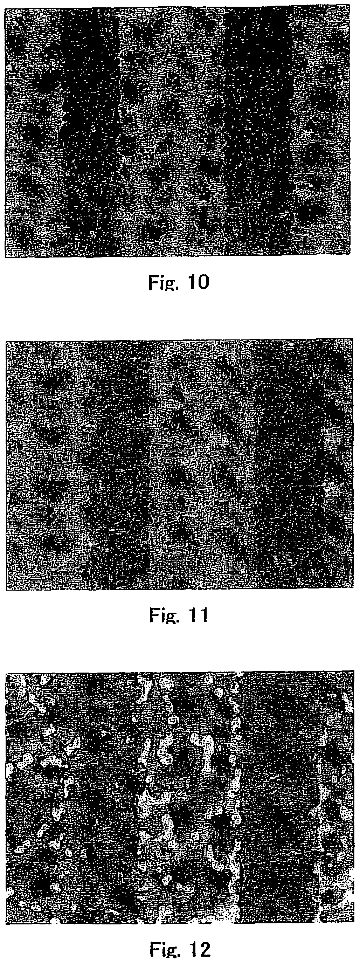

An image having different colors adjacent to one another was printed on the surface of coat paper in the same manner as in Example 11 as shown in Table 5 except that the ink-receiving solution was not applied to the coat paper. The obtained print image is shown in Fig. 12. The color bleeding and water resistance of the obtained print image were evaluated.

[Comparative Examples 7 and 8]

An image having different colors adjacent to one another was printed on the surface of coat paper in the same manner as in Example 11 as shown in Table 5 except that NaCl and K$_2$SO$_4$ were used in place of CaCl$_2$ as a metal salt in Comparative Examples 7 and 8, respectively. The print images are shown in Figs. 13 and 14. The color bleeding and water resistance of each of the obtained print images were evaluated.

[Comparative Example 9]

An image having different colors adjacent to one another was printed on the surface of coat paper in the same manner as in Example 11 except that the pigment dispersions 2, 7, 8 and 9 shown in Table 5 were used. The color bleeding and water resistance of the obtained print image were evaluated.

[Table 5]

| | Ink-receiving solution | | Recording medium | Inkjet ink | | Evaluation results | | |
|---|---|---|---|---|---|---|---|---|
| | Metal salt | Concentration (mol/L) | | Pigment dispersion | Functional group | Color bleeding | Water resistance | Fig. No. |
| Example 11 | $CaCl_2$ | 0,1 | coat paper | 1,4,5,6 | phosphonic acid group | AA | A | Fig. 8 |
| Example 12 | $MgCl_2$ | 0,1 | coat paper | 1,4,5,6 | phosphonic acid group | AA | A | Fig. 9 |
| Example 13 | $MgSO_4$ | 0,1 | coat paper | 1,4,5,6 | phosphonic acid group | AA | A | Fig. 10 |
| Example 14 | $ZnCl_2$ | 0,1 | coat paper | 1,4,5,6 | phosphonic acid group | A | A | Fig. 11 |
| Example 15 | calcium propionate | 0,1 | coat paper | 1,4,5,6 | phosphonic acid group | A | A | - |
| Example 16 | calcium pantothenate | 0,1 | coat paper | 1,4,5,6 | phosphonic acid group | A | A | - |
| Example 17 | $CaCl_2$ | 0,05 | coat paper | 1,4,5,6 | phosphonic acid group | A | A | - |
| Comparative Example 6 | - | - | coat paper | 1,4,5,6 | phosphonic acid group | C | A | Fig. 12 |
| Comparative Example 7 | NaCl | 0,1 | coat paper | 1,4,5,6 | phosphonic acid group | B | A | Fig. 13 |
| Comparative Example 8 | $K_2SO_4$ | 0,1 | coat paper | 1,4,5,6 | phosphonic acid group | B | A | Fig. 14 |
| Comparative Example 9 | $CaCl_2$ | 0,1 | coat paper | 2,7,8,9 | carboxylic acid group | B | C | - |
| * Pigment dispersions 1, 4, 5 and 6: self-dispersion type pigment having a phosphonic acid group as a phosphorus-containing group | | | | | | | | |
| * Pigment dispersions 2, 7, 8 and 9: self-dispersion type pigment having a carboxyl group bound thereto | | | | | | | | |

[Examples 18 to 20]

After an ink-receiving solution was applied uniformly to the entire surface of a recording medium and dried in the same manner as in Example 16 except that non-absorbing materials shown in Table 6 were used as recording media in Examples 18 to 20, an image having different colors adjacent to one another was printed on the surface of each of the recording media in the same manner as in Example 11. The color bleeding and color shading of each of the obtained print images were evaluated. The print image obtained in Example 18 is shown in Fig. 18.

[Comparative Examples 10 to 13]

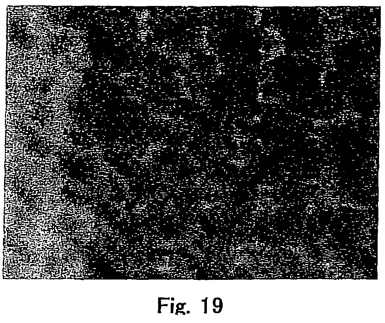

An image having different colors adjacent to one another was printed on the surface of a recording medium in the same manner as in Example 11 except that non-absorbing substrates shown in Table 6 were used, no ink-receiving solution was used and the pigment dispersions 1, 4, 5 and 6 were used in Comparative Examples 10 to 13. The color bleeding and color shading of each of the obtained print images were evaluated. The print image obtained in Comparative Example 10 is shown in Fig. 19.

The evaluation results of Examples 1 to 20, Comparative Examples 1 to 13 and Reference Example 1 are shown in Tables 4, 5 and 6.

[Table 6]

| | Ink-receiving solution | | Recording medium | Inkjet ink | Evaluation results | | | |
|---|---|---|---|---|---|---|---|---|
| | Metal salt | Concentration (mol/L) | | Pigment dispersion | Functional group | color bleeding | color unevenness | Fig. No. |
| Example 18 | calcium pantothenate | 0,2 | polypropylene | 1,4,5,6 | phosphonic acid group | A | A | Fig. 18 |
| Example 19 | calcium pantothenate | 0,2 | aluminum deposited polyester | 1,4,5,6 | phosphonic acid group | A | A | - |
| Example 20 | calcium pantothenate | 0,2 | white PET | 1,4,5,6 | phosphonic acid group | A | A | - |
| Example 21 | calcium pantothenate | 0,2 | transparent PET | 1,4,5,6 | phosphonic acid group | A | A | - |
| Comparative Example 10 | - | - | polypropylene | 1,4,5,6 | phosphonic acid group | C | C | Fig. 19 |
| Comparative Example 11 | - | - | aluminum deposited polyester | 1,4,5,6 | phosphonic acid group | C | C | - |
| Comparative Example 12 | - | - | white PET | 1,4,5,6 | phosphonic acid group | C | C | - |
| Comparative Example 13 | - | - | aransparent PET | 1,4,5,6 | -phosphonic acid group | C | C | - |
| * Pigment dispersions 1, 4, 5 and 6: self-dispersion type pigment having a phosphonic acid group as a phosphorus-containing group | | | | | | | | |

It was confirmed from the above results that feathering and color bleeding are suppressed by printing on a recording medium to which the ink-receiving solution containing a specific metal salt of the present invention has been applied by using an inkjet ink containing a specific pigment, thereby obtaining a print product having high fixability.

**Claims**

1.   An inkjet recording method comprising the steps of:

applying an ink-receiving solution prepared by dissolving in an aqueous solvent at least one metal salt having a water solubility of 0.1 mol/l or more, selected from calcium salts, magnesium salts, nickel salts and zinc salts having a valence of 2 or more, to at least the surface to be printed by using an inkjet ink or the entire surface of a recording medium; and printing on the metal salt adhered part by using the inkjet ink comprising at least a pigment, a resin emulsion and an aqueous solvent containing a surfactant,
wherein a phosphorus-containing group having at least one P-O or P=O bond is bound to the surface of the pigment, and
the conductance of an aqueous solution containing 1 mass% of a solid content of the resin emulsion is 300 $\mu$S/cm or less.

2.   The inkjet recording method according to claim 1, wherein the metal salt is a chloride, acetate or nitrate of calcium, magnesium, nickel or zinc.

3.   The inkjet recording method according to claim 1, wherein the metal salt is a calcium chloride or magnesium chloride.

4.   The inkjet recording method according to claim 1, wherein the metal salt is an organic acid salt of calcium, magnesium, nickel or zinc.

5.   The inkjet recording method according to any one of claims 1 to 4, wherein the concentration of the metal salt in the ink-receiving solution is 0.05 to 2.0 mol/l.

6.   The inkjet recording method according to claim 1, wherein the amount of the ink-receiving solution applied to the recording medium is 0.01 to 2000 $\mu$mol/cm$^2$ as a metal salt.

7.   The inkjet recording method according to claim 1, wherein the ink-receiving solution is applied to the recording medium by at least one method selected from spray, coating, inkjet, gravure and flexographic methods.

8.   The inkjet recording method according to claim 1, wherein the recording medium is coated paper or uncoated paper.

9.   The inkjet recording method according to claim 1, wherein the recording medium is cloth.

10.   The inkjet recording method according to claim 1, wherein the recording medium is a non-absorbing substrate.

11.   The inkjet recording method according to claim 1, wherein the phosphorus-containing group is at least one selected from phosphonic acid group, phosphinic acid group, phosphinous acid group, phosphite group, phosphate group, diphosphate group, triphosphate group, pyrophosphate group, and partial esters and salts thereof.

12.   The inkjet recording method according to claim 1, wherein the phosphorus-containing group has a larger calcium index than the calcium index of 1,2,3-benzenetricarboxylic acid.

13.   The inkjet recording method according to claim 1, wherein the average particle diameter of the resin emulsion is 500 nm or less.

14.   The inkjet recording method according to claim 1 , wherein the inkjet ink contains 0.05 to 20 mass% of the resin emulsion as a solid content.

15.   The inkjet recording method according to claim 1, wherein the inkjet ink contains 0.05 to 20 mass% of the pigment and 0.05 to 20 mass% of the resin emulsion as a solid content, and has a total solid content of the pigment and the resin emulsion of 0.1 to 30 mass%.

**Patentansprüche**

1.  Tintenstrahlaufzeichnungsverfahren, umfassend die Schritte:

    Aufbringen einer Tinte empfangenden Lösung, die durch Auflösen mindestens eine Metallsalzes mit einer Wasserlöslichkeit von 0,1 mol/l oder mehr, ausgewählt aus Calciumsalzen, Magnesiumsalzen, Nickelsalzen und Zinksalzen mit einer Valenz von 2 oder mehr in einem wässrigen Lösungsmittel bereitet wird, auf mindestens die unter Verwendung einer Tintenstrahltinte zu bedruckende Oberfläche oder die gesamte Oberfläche eines Aufzeichnungsmediums und Drucken auf den mit dem Metallsalz verhafteten Teil unter Verwendung der Tintenstrahltinte umfassend mindestens ein Pigment, eine Harzemulsion und ein wässriges Lösungsmittel enthaltend ein Tensid, wobei eine phosphorhaltige Gruppe mit mindestens einer P-O oder P=O Bindung an die Oberfläche des Pigments gebunden ist und die Leitfähigkeit einer wässrigen Lösung enthaltend 1 Masse-% eines Feststoffgehalts der Harzemulsion 300 $\mu$S/cm oder weniger beträgt.

2.  Tintenstrahlaufzeichnungsverfahren nach Anspruch 1, wobei das Metallsalz ein Chlorid, Acetat oder Nitrat von Calcium, Magnesium, Nickel oder Zink ist.

3.  Tintenstrahlaufzeichnungsverfahren nach Anspruch 1, wobei das Metallsalz ein Calciumchlorid oder Magnesiumchlorid ist.

4.  Tintenstrahlaufzeichnungsverfahren nach Anspruch 1, wobei das Metallsalz ein organisches saures Salz von Calcium, Magnesium, Nickel oder Zink ist.

5.  Tintenstrahlaufzeichnungsverfahren nach einem der Ansprüche 1 bis 4, wobei die Konzentration des Metallsalzes in der Tinte empfangenden Lösung 0,05 bis 2,0 mol/l beträgt.

6.  Tintenstrahlaufzeichnungsverfahren nach Anspruch 1, wobei die Menge an auf das Aufzeichnungsmedium aufgebrachter Tinte empfangender Lösung 0,01 bis 2000 $\mu$mol/cm$^2$ als Metallsalz beträgt.

7.  Tintenstrahlaufzeichnungsverfahren nach Anspruch 1, wobei die Tinte empfangende Lösung auf das Aufzeichnungsmedium durch mindestens ein Verfahren, ausgewählt aus Sprüh-, Beschichtungs-, Tintenstrahl-, Gravur- und Flexodruckverfahren aufgebracht wird.

8.  Tintenstrahlaufzeichnungsverfahren nach Anspruch 1, wobei das Aufzeichnungsmedium beschichtetes Papier oder unbeschichtetes Papier ist.

9.  Tintenstrahlaufzeichnungsverfahren nach Anspruch 1, wobei das Aufzeichnungsmedium Tuch ist.

10. Tintenstrahlaufzeichnungsverfahren nach Anspruch 1, wobei das Aufzeichnungsmedium ein nicht absorbierendes Substrat ist.

11. Tintenstrahlaufzeichnungsverfahren nach Anspruch 1, wobei die phosphorhaltige Gruppe mindestens eine ausgewählt aus der Phosphonsäuregruppe, Phosphinsäuregruppe, phosphiniger Säuregruppe, Phosphitgruppe, Phosphatgruppe, Diphosphatgruppe, Triphosphatgruppe, Pyrophosphatgruppe und Partialestern und Salzen derselben ist.

12. Tintenstrahlaufzeichnungsmedium nach Anspruch 1, wobei die phosphorhaltige Gruppe einen höheren Calciumindex als der Calciumindex von 1,2,3-Benzentricarboxylsäure aufweist.

13. Tintenstrahlaufzeichnungsverfahren nach Anspruch 1, wobei der durchschnittliche Partikeldurchmesser der Harzemulsion 500nm oder weniger beträgt.

14. Tintenstrahlaufzeichnungsverfahren nach Anspruch 1, wobei die Tintenstrahltinte 0,05 bis 20 Masse-% der Harzemulsion als Feststoffanteil enthält.

15. Tintenstrahlaufzeichnungsverfahren nach Anspruch 1, wobei die Tintenstrahltinte 0,05 bis 20 Masse-% des Pigments und 0,05 bis 20 Masse-% der Harzemulsion als Feststoffanteil enthält und einen Gesamtfeststoffanteil des Pigments und der Harzemulsion von 0,1 bis 30 Masse-% aufweist.

## Revendications

1. Procédé d'enregistrement à jet d'encre comprenant les étapes de :

   application d'une solution de réception d'encre préparée en dissolvant dans un solvant aqueux au moins un sel de métal ayant une solubilité dans l'eau de 0,1 mol/l ou plus, sélectionné à partir de sels de calcium, sels de magnésium, sels de nickel et sels de zinc ayant une valence de 2 ou plus, à au moins la surface à imprimer en utilisant une encre à jet d'encre ou la surface entière d'un support d'enregistrement ; et impression sur la partie à sel de métal adhéré en utilisant l'encre à jet d'encre comprenant au moins un pigment, une émulsion de résine et un solvant aqueux contenant un agent de surface,
   dans lequel un groupe contenant du phosphore ayant au moins une liaison P-O ou P=O est lié à la surface du pigment, et
   la conductance d'une solution aqueuse contenant 1 % en masse d'un contenu solide de l'émulsion de résine est de 300 $\mu$S/cm ou moins.

2. Procédé d'enregistrement à jet d'encre selon la revendication 1, dans lequel le sel de métal est un chlorure, un acétate ou un nitrate de calcium, de magnésium, de nickel ou de zinc.

3. Procédé d'enregistrement à jet d'encre selon la revendication 1, dans lequel le sel de métal est un chlorure de calcium ou un chlorure de magnésium.

4. Procédé d'enregistrement à jet d'encre selon la revendication 1, dans lequel le sel de métal est un sel d'acide organique de calcium, de magnésium, de nickel ou de zinc.

5. Procédé d'enregistrement à jet d'encre selon n'importe laquelle des revendications 1 à 4, dans lequel la concentration du sel de métal dans la solution de réception d'encre est de 0,05 à 2,0 mol/l.

6. Procédé d'enregistrement à jet d'encre selon la revendication 1, dans lequel la quantité de la solution de réception d'encre appliquée au support d'enregistrement est de 0,01 à 2 000 $\mu$mol/cm$^2$ en tant que sel de métal.

7. Procédé d'enregistrement à jet d'encre selon la revendication 1, dans lequel la solution de réception encre est appliquée au support d'enregistrement par au moins un procédé sélectionné à partir des procédés de vaporisation, revêtement, à jet d'encre, gravure et flexographique.

8. Procédé d'enregistrement à jet d'encre selon la revendication 1, dans lequel le support d'enregistrement est du papier couché ou du papier non couché.

9. Procédé d'enregistrement à jet d'encre selon la revendication 1, dans lequel le support d'enregistrement est du tissu.

10. Procédé d'enregistrement à jet d'encre selon la revendication 1, dans lequel le support d'enregistrement est un substrat de non absorbant.

11. Procédé d'enregistrement à jet d'encre selon la revendication 1, dans lequel le groupe contenant du phosphore est au moins un groupe sélectionné à partir du groupe acide phosphonique, du groupe acide phosphinique, du groupe acide phosphineux, du groupe phosphite, du groupe phosphate, du groupe diphosphate, du groupe triphosphate, du groupe pyrophosphate, et des esters partiels et des sels de ceux-ci.

12. Procédé d'enregistrement à jet d'encre selon la revendication 1, dans lequel le groupe contenant du phosphore a un plus grand indice de calcium que l'indice de calcium de l'acide 1,2,3-benzènetricarboxylique.

13. Procédé d'enregistrement à jet d'encre selon la revendication 1, dans lequel le diamètre de particule moyen de l'émulsion de résine est de 500 nm ou moins.

14. Procédé d'enregistrement à jet d'encre selon la revendication 1, dans lequel l'encre à jet d'encre contient de 0,05 à 20 % en masse de l'émulsion de résine en tant que contenu solide.

15. Procédé d'enregistrement à jet d'encre selon la revendication 1, dans lequel l'encre à jet d'encre contient de 0,05 à 20 % en masse du pigment et de 0,05 à 20 % en masse de l'émulsion de résine en tant que contenu solide, et a une teneur totale en solide du pigment et de l'émulsion de résine de 0,1 à 30 % en masse.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9207424 A
- JP 11034478 A
- JP 2009178912 A
- JP 2010005832 A
- JP 2009513802 A
- JP 2009515007 A
- EP 1088865 A1
- US 2007100023 A1
- US 2007100024 A1
- US 5554739 A
- US 5707432 A
- US 5837045 A
- JP 2000178478 A
- JP 2000314030 A
- JP 3095209 A
- US 4922007 A

**Non-patent literature cited in the description**

- **KIECZYKOWSKI et al.** *J. Org. Chem.,* 1995, vol. 60, 8310-8312